# EUROPEAN PATENT APPLICATION

(11) **EP 4 768 288 A1**
(43) Date of publication of application: **01.07.2026**
(21) Application number: 25224902.4
(22) Date of filing: 18.12.2025
(51) Int. Cl.: B60H 3/06, B60H 1/00

(54) **WORKING VEHICLE**

(30) Priority: 25.12.2024 JP 2024229150
(71) Applicant: Kubota Corporation, Osaka-shi, Osaka 530-0011 (JP)
(72) Inventor: YASUNOBE, Daisuke, Sakai-shi (JP); HIRATA, Yuya, Sakai-shi (JP); INOUE, Ryuichi, Sakai-shi (JP); YOSHIDA, Ryohei, Sakai-shi (JP)
(74) Representative: Schlegel, Sebastian

(57) **Abstract**

A working vehicle includes a roof unit having an internal space partitioned by an inner roof and an outer roof, an air conditioning unit that is housed in the internal space and air-conditions the interior of a cabin, a filter device capable of removing a removal target contained in introduced external air, a filter device capable of removing a removal target contained in introduced external air and being different from the first filter device, and a switching mechanism capable of switching among a first introduction state in which the air purified by the filter device is introduced into the air conditioning unit, a second introduction state in which the air purified by the filter device is introduced into the air conditioning unit, and an inside air circulation state in which air from the interior of the cabin is introduced into the air conditioning unit.

## Description

The disclosure relates to a technique of a working vehicle.

### Background

Conventionally, a technique of a working vehicle is known. For example, JP 2005-35543 A discloses such a configuration.

The tractor described in JP 2005-35543 A includes a roof, a filter, a fan, and the like. The roof is formed in a hollow shape. The filter and the fan are provided on the roof. When the fan is driven, air outside the tractor is purified by the filter and then sent into the cabin.

In the tractor described in JP 2005-35543 A, only one path for sending air into the cabin through the filter is described. However, since the degree of contamination of the air outside the tractor varies depending on the work content of the tractor, the traveling place, and the like, there is a case where it is desired to use a plurality of filters having different purification performances depending on the degree of contamination of the air. There is also a case where it is desired to circulate air in a cabin of the tractor. Thus, there is a demand for a technique capable of switching the supply path of air to be sent into the cabin to selectively use the filters described above and circulate the air in the cabin (capable of improving convenience).

### Summary

One aspect of the present disclosure has been made in view of the above circumstances, and an object thereof is to provide a working vehicle capable of improving convenience.

The problem to be solved by one aspect of the present disclosure is as described above, and units for solving the problem will be described below.

In one aspect of the present disclosure, a working vehicle includes a roof unit having an internal space partitioned by an inner roof and an outer roof, an air conditioning unit that is housed in the internal space and air-conditions an interior of a cabin, a first filter device capable of removing a removal target contained in introduced external air, a second filter device capable of removing a removal target contained in introduced external air and different from the first filter device, and a switching mechanism capable of switching among a first introduction state in which air purified by the first filter device is introduced into the air conditioning unit, a second introduction state in which air purified by the second filter device is introduced into the air conditioning unit, and an inside air circulation state in which air from the interior of the cabin is introduced into the air conditioning unit.

According to one aspect of the present disclosure, since the three states (first introduction state, second introduction state, and inside air circulation state) can be switched by the switching mechanism, convenience can be improved.

**In** one aspect of the present disclosure, a working vehicle further includes an introduction member in which a first opening into which the air purified by the first filter device is introduced, a second opening into which the air purified by the second filter device is introduced, and a third opening into which air from the interior of the cabin is introduced are formed, and a duct portion that guides the air introduced into the introduction member to the air conditioning unit. According to one aspect of the present disclosure, air can be introduced into the air conditioning unit by using a common path (the introduction member and the duct portion), so that the flow path of the air can be simplified.

In one aspect of the present disclosure, the second opening and the third opening are formed on a downstream side of the first opening in a flowing direction of the air purified by the first filter device, and the switching mechanism includes a first switching unit that switches whether or not to introduce the air purified by the first filter device into the first opening, a second switching unit that switches whether or not to introduce the air purified by the second filter device into the second opening, a third switching unit that switches whether or not to introduce air among the first opening, the second opening, and the third opening in the flowing direction, and a drive unit that drives the first switching unit, the second switching unit, and the third switching unit. According to one aspect of the present disclosure, the first introduction state, the second introduction state, and the inside air circulation state can be switched by controlling the drive unit.

In one aspect of the present disclosure, the first switching unit and the third switching unit are provided on the introduction member.

According to one aspect of the present disclosure, the first switching unit and the third switching unit can be provided using a common member (introduction member).

In one aspect of the present disclosure, a working vehicle further includes a detection unit that detects a switching state of the first switching unit.

According to one aspect of the present disclosure, it is possible to grasp whether or not air can be introduced into the first opening.

In one aspect of the present disclosure, a working vehicle further includes a blower that is connected to the second filter device and sends air purified by the second filter device, and a duct that is connected to the blower and the introduction member and guides air sent from the blower to the introduction member, in which the second switching unit is configured to open and close a connecting portion between the blower and the duct.

According to one aspect of the present disclosure, it is possible to switch whether or not to introduce air into the second opening at a position relatively close to the second filter device (end of duct on second filter device side).

In one aspect of the present disclosure, an inside air introduction section that introduces the air in the cabin into the internal space is formed in the inner roof, and the inside air introduction section, the second filter device, and the introduction member are disposed in parallel along a left-right direction in plan view.

According to one aspect of the present disclosure, it is possible to effectively utilize spaces on the front side and the rear side of the inside air introduction section, the second filter device, and the like.

According to one aspect of the present disclosure, convenience can be improved.

### Brief description of drawings

- Fig. 1: is a left side view illustrating an overall configuration of a tractor according to one aspect of the present disclosure;
- Fig. 2: is a front perspective view illustrating a cabin;
- Fig. 3: is a front exploded perspective view of the same;
- Fig. 4: is a plan view illustrating a cabin frame;
- Fig. 5: is a left side view illustrating the periphery of a left rear pillar;
- Fig. 6: is a cross-sectional view taken along line A1-A1 in Fig. 5;
- Fig. 7: is a right side view illustrating the periphery of a right rear pillar;
- Fig. 8: is a front exploded perspective view illustrating a roof;
- Fig. 9: is a plan view illustrating an inner roof;
- Fig. 10: is a cross-sectional view of the roof taken along line A2 depicted in Fig. 9;
- Fig. 11: is a plan view illustrating a state in which a filter device is attached and detached;
- Fig. 12: is a plan view schematically illustrating a flow path of air in the inner roof;
- Fig. 13: is a cross-sectional plan view schematically illustrating a case;
- Fig. 14: is a cross-sectional plan view schematically illustrating an introduction member;
- Fig. 15A: is a cross-sectional view taken along line A3-A3 in Fig. 14;
- Fig. 15B: is a cross-sectional view taken along line A4-A4 in Fig. 14;
- Fig. 16A: is a schematic view illustrating a flow path of outside air introduced from the left rear pillar;
- Fig. 16B: is a schematic view illustrating a flow path of outside air introduced from the right rear pillar;
- Fig. 17: is a schematic view illustrating a flow path of air introduced from the cabin;
- Fig. 18: is a plan view illustrating a first seal member and a second seal member;
- Fig. 19A: is a plan view illustrating an attachment structure of a second seal member;
- Fig. 19B: is a plan view illustrating grooves;
- Fig. 20: is a cross-sectional view taken along line A5-A5 in Fig. 19A;
- Fig. 21A: is a plan view illustrating a fixing structure of an air conditioner;
- Fig. 21B: is also an exploded perspective view;
- Fig. 22: is a cross-sectional view taken along line A6-A6 in Fig. 21A;
- Fig. 23A: is a cross-sectional view taken along line A7-A7 in Fig. 21A;
- Fig. 23B: is a cross-sectional view taken along line A8-A8 in Fig. 23A;
- Fig. 24: is a plan view illustrating heater hoses and cooler hoses;
- Fig. 25A: is a plan view illustrating the heater hoses;
- Fig. 25B: is a plan view illustrating the cooler hoses;
- Fig. 26: is a cross-sectional view taken along line A9-A9 in Fig. 24;
- Fig. 27: is a side view illustrating a right front pillar and a heater hose; and
- Fig. 28: is a plan view illustrating a first seal member disposed inside a second seal member.

### Description of embodiments

In the following description, directions indicated by arrows U, D, F, B, L, and R in the drawings are defined as an upward direction, a downward direction, a forward direction, a backward direction, a left direction, and a right direction, respectively.

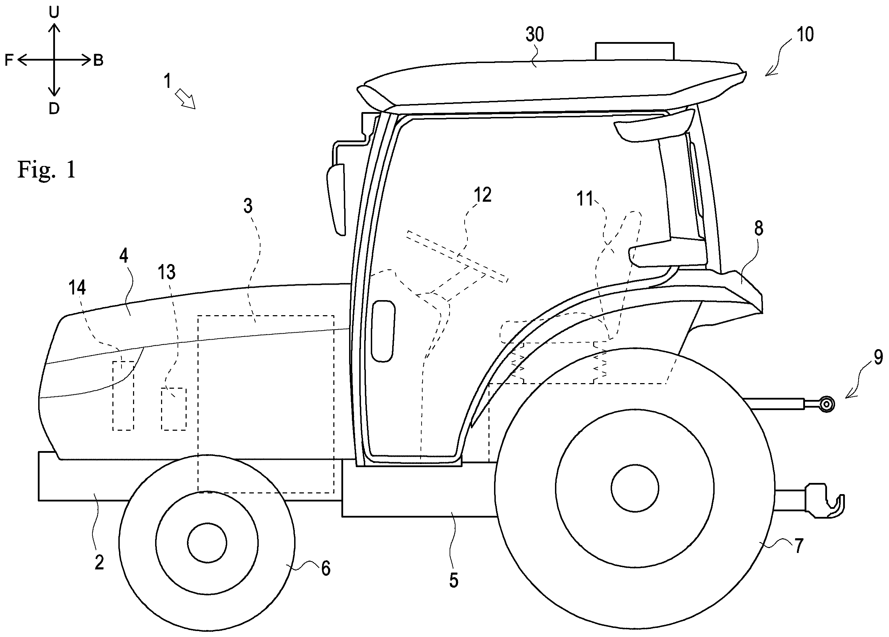

First, an overall configuration of a tractor 1 that is a working vehicle according to one aspect of the present disclosure will be described. As illustrated in Fig. 1, the tractor 1 mainly includes a machine body frame 2, an engine 3, a hood 4, a transmission case 5, front wheels 6, rear wheels 7, fenders 8, a lifting device 9, a cabin 10, and the like.

The machine body frame 2 is a frame-shaped member formed by appropriately combining a plurality of panel members. The machine body frame 2 is disposed in a front portion of the tractor 1 with its longitudinal direction oriented in the front-rear direction. The engine 3 is fixed to a rear portion of the machine body frame 2. The engine 3 is covered with the hood 4. The transmission case 5 is provided on a rear portion of the engine 3. The transmission case 5 houses a transmission (not illustrated) that changes the speed of power from the engine 3.

The front portion of the machine body frame 2 is supported by the pair of left and right front wheels 6 via a front axle mechanism (not illustrated). A rear portion of the transmission case 5 is supported by the pair of left and right rear wheels 7 via a rear axle mechanism (not illustrated). The pair of left and right rear wheels 7 are substantially covered from above by the fenders 8.

The lifting device 9 is provided at the rear portion of the transmission case 5. Various work devices (for example, a cultivator or the like) can be attached to the lifting device 9. The lifting device 9 can lift and lower the attached work device by an actuator such as a hydraulic cylinder.

Power of the engine 3 is shifted by the transmission (not illustrated) or the like housed in the transmission case 5, and then is transmitted to the front axle mechanism, and can be transmitted to the front wheels 6 via the front axle mechanism. Further, the power shifted by the transmission can be transmitted to the rear wheels 7 via the rear axle mechanism. In this manner, the front wheels 6 and the rear wheels 7 are rotationally driven by the power of the engine 3, and the tractor 1 can travel. In addition, the work device attached to the lifting device 9 can be driven by the power of the engine 3.

The cabin 10 is provided behind the engine 3. The cabin 10 is placed on a vehicle body (such as the transmission case 5). An interior space in which an operator rides is formed inside the cabin 10. In the interior space, a seat 11 on which an operator sits is disposed. Further, a steering wheel 12 for adjusting the turning angle of the front wheels 6 is disposed in the front portion of the cabin 10.

The hood 4 is formed in a substantially box shape with a lower portion and a rear portion opened. The machine body frame 2, the hood 4, and the like form an engine room. In the engine room, a compressor 13 that compresses a refrigerant, a condenser 14 that cools the refrigerant compressed by the compressor 13, the engine 3, and the like are disposed.

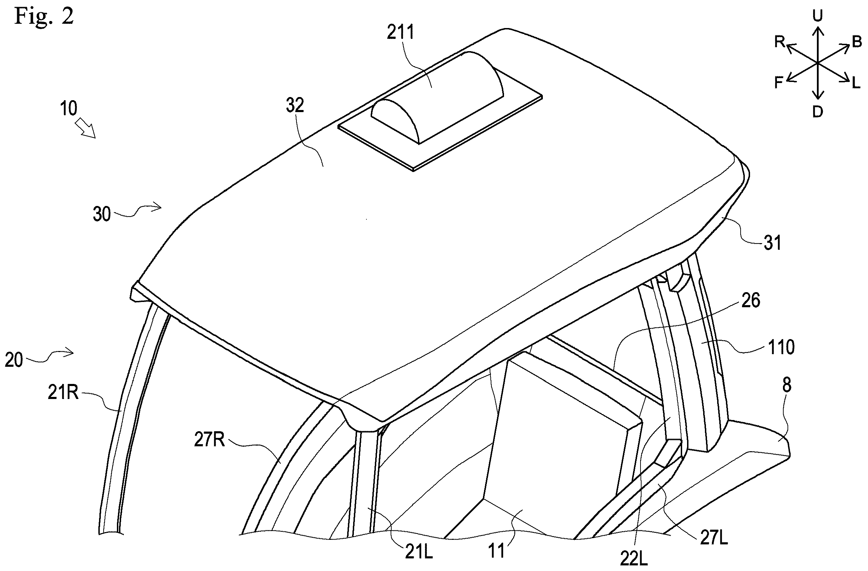

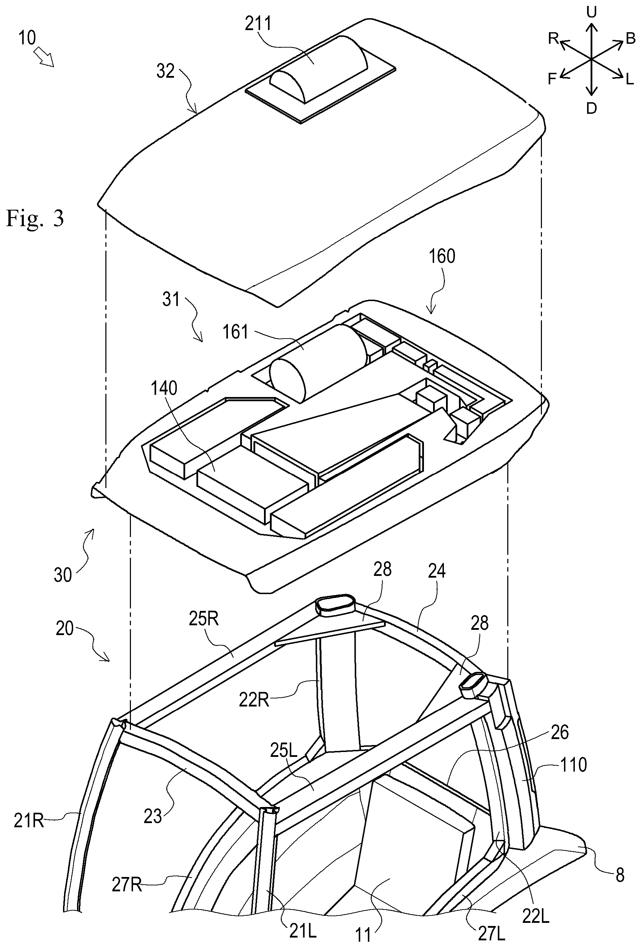

Next, a configuration of the cabin 10 will be described. As illustrated in Figs. 2 and 3, the cabin 10 mainly includes a cabin frame 20, a roof unit 30, and the like.

The cabin frame 20 constitutes a framework of the cabin 10. The cabin frame 20 is formed by combining a longitudinal frame member, a plate-like member, and the like. Specifically, as illustrated in Fig. 3, the cabin frame 20 mainly includes a left front pillar 21L, a right front pillar 21R, a left rear pillar 22L, a right rear pillar 22R, a front beam 23, a rear beam 24, a left side beam 25L, a right side beam 25R, a rear lower frame 26, a left side lower frame 27L, a right side lower frame 27R, a frame reinforcing member 28, and the like.

The left front pillar 21L, the right front pillar 21R, the left rear pillar 22L, and the right rear pillar 22R are disposed such that longitudinal directions thereof are substantially vertical directions. The left front pillar 21L and the right front pillar 21R are disposed in the front portion of the cabin 10 so as to be spaced apart from each other in the left-right direction. The left front pillar 21L and the right front pillar 21R support the front side of the roof unit 30 to be described later. The left rear pillar 22L and the right rear pillar 22R are disposed in a rear portion of the cabin 10 at an interval in the left-right direction. The left rear pillar 22L and the right rear pillar 22R support the rear side of the roof unit 30.

As described above, the cabin frame 20 of the present embodiment is a four-pillar cabin frame 20 having no center pillar between the front pillars 21L and 21R and the rear pillars 22L and 22R. Note that the configuration of the cabin frame 20 is not limited to the present embodiment, and can be arbitrarily changed. For example, the cabin frame 20 may include a six-pillar cabin frame 20 in which center pillars are disposed between the front pillars 21L and 21R and the rear pillars 22L and 22R.

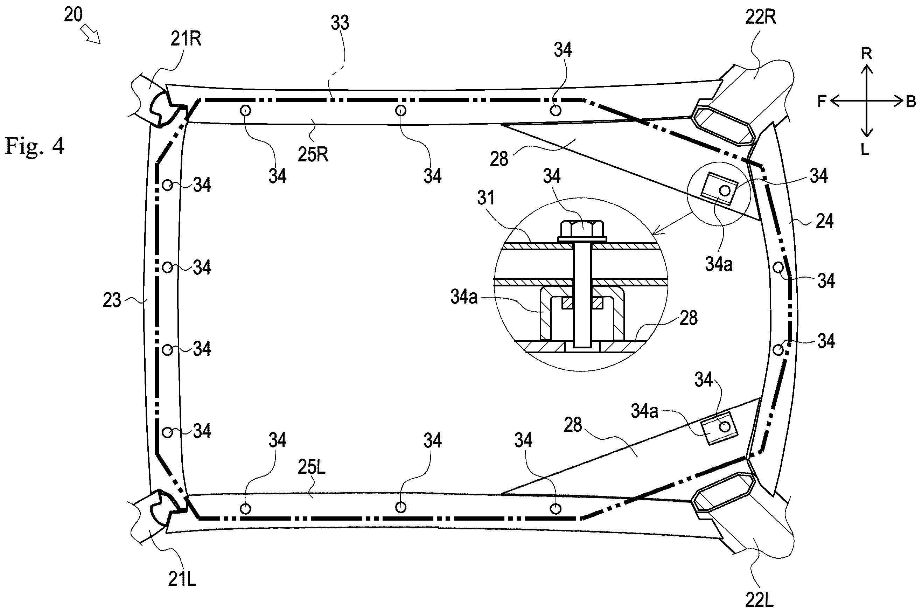

The front beam 23, the rear beam 24, the left side beam 25L, and the right side beam 25R illustrated in Figs. 3 and 4 constitute an upper portion of the cabin frame 20. The front beam 23 and the like are disposed with the longitudinal direction thereof oriented in a substantially horizontal direction. The front beam 23 is disposed so as to connect the upper ends of the left front pillar 21L and the right front pillar 21R. The rear beam 24 is disposed so as to connect the upper ends of the left rear pillar 22L and the right rear pillar 22R. The left side beam 25L is disposed so as to connect the upper ends of the left front pillar 21L and the left rear pillar 22L. The right side beam 25R is disposed so as to connect the upper ends of the right front pillar 21R and the right rear pillar 22R. In this manner, the front beam 23, the rear beam 24, the left side beam 25L, and the right side beam 25R are formed in a rectangular frame shape in plan view.

The rear lower frame 26 illustrated in Fig. 3 is disposed so as to connect lower ends of the left rear pillar 22L and the right rear pillar 22R. The left side lower frame 27L is disposed so as to extend forward and downward from the left rear pillar 22L. The right side lower frame 27R is disposed so as to extend forward and downward from the right rear pillar 22R. The left side lower frame 27L and the right side lower frame 27R are formed in a curved shape in a side view so as to bulge forward and upward, and the fenders 8 are fixed to the lower portions of the left side lower frame 27L and the right side lower frame 27R, respectively.

The frame reinforcing member 28 illustrated in Figs. 3 and 4 reinforces rear upper portion of the cabin frame 20. The frame reinforcing member 28 is provided at each of a corner portion between a rear end of the right side beam 25R and a right end of the rear beam 24 and a corner portion between a rear end of the left side beam 25L and a left end of the rear beam 24 (a pair of left and right). The frame reinforcing member 28 is formed in a substantially triangular shape in plan view along the corner portion.

As illustrated in Fig. 4, a seal member 33 is disposed on an upper surface of the cabin frame 20. The seal member 33 seals between the cabin frame 20 and the roof unit 30. The seal member 33 is made of an elastically deformable material (for example, rubber). The seal member 33 is placed on the front beam 23, the rear beam 24, the left side beam 25L, the right side beam 25R, and the frame reinforcing member 28, and is disposed annularly along the cabin frame 20.

The roof unit 30 illustrated in Fig. 3 constitutes a ceiling portion of the cabin 10. The roof unit 30 is provided on the upper portion of the cabin frame 20 and is disposed to cover the seat 11 from above. The roof unit 30 mainly includes an inner roof 31 and an outer roof 32.

The inner roof 31 is fixed to the upper portion of the cabin frame 20 and constitutes a ceiling in the cabin 10. An air conditioning unit 140 and the like to be described later are disposed inside the inner roof 31. The outer roof 32 is disposed on an upper side of the inner roof 31 and is fixed to an upper portion of the inner roof 31. The outer roof 32 is formed so as to cover the inner roof 31 from above. The roof unit 30 is formed in a substantially hollow box shape by the outer roof 32 and the inner roof 31.

In the cabin 10 according to the present embodiment, outside air can be introduced into the roof unit 30 through the left rear pillar 22L and the right rear pillar 22R. Further, in the present embodiment, air in the interior space of the cabin 10 (in the cabin 10) can also be introduced into the roof unit 30. The air conditioning unit 140 in the roof unit 30 performs air conditioning of the air introduced into the roof unit 30. The air conditioned by the air conditioning unit 140 is blown into the room. Hereinafter, structures related to the flow of air as described above will be sequentially described.

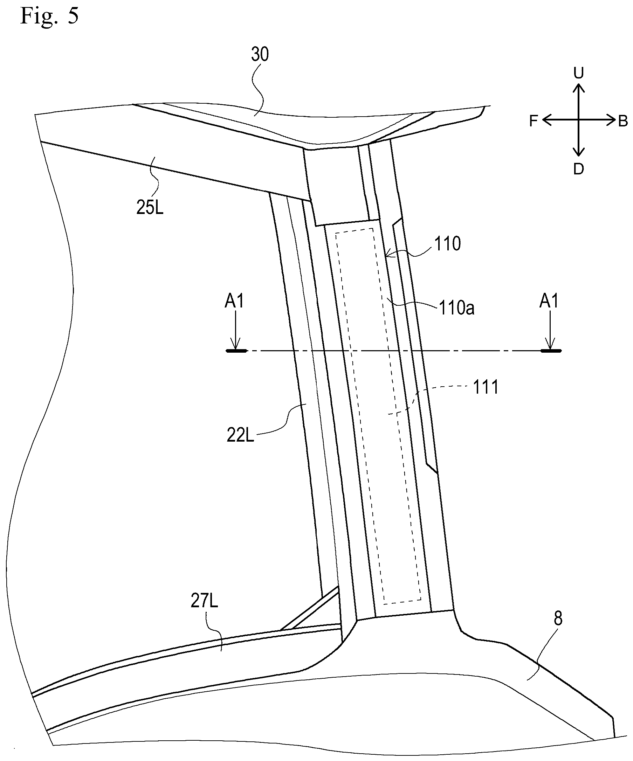

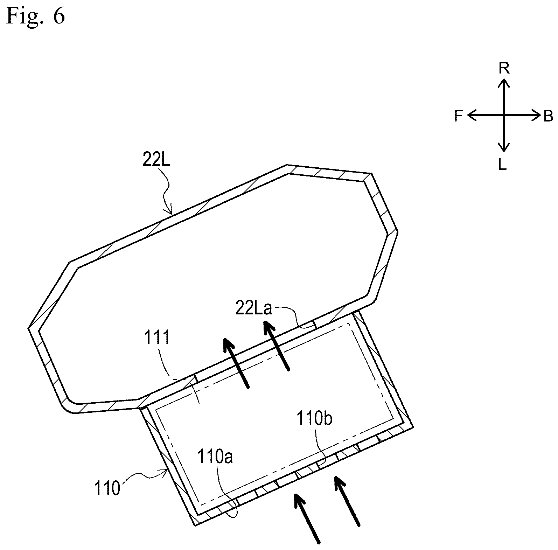

First, the structure of the left rear pillar 22L and its periphery (filter housing member 110 and the like) illustrated in Figs. 5 and 6 will be described.

The left rear pillar 22L is formed in a longitudinal shape extending vertically. Further, the left rear pillar 22L is formed in a curved shape slightly expanding outward in the left-right direction. The left rear pillar 22L is formed in a hollow shape having a substantially rectangular cross section (see Fig. 6). An opening 22La that allows the inside and the outside of the left rear pillar 22L to communicate with each other is formed on a side surface of the left rear pillar 22L facing substantially the left direction.

The opening 22La is for taking in outside air introduced into a filter device 111 to be described later. The opening 22La is formed in, for example, a rectangular shape in side view, and at least one opening is formed on a left side surface of left rear pillar 22L. Note that the configuration of the opening 22La (number, shape, and the like) is not particularly limited, and can be appropriately changed. The left rear pillar 22L can introduce outside air from opening 22La. The outside air introduced into the left rear pillar 22L can flow upward through the left rear pillar 22L and flow into the roof unit 30 from the upper end of the left rear pillar 22L.

The filter housing member 110 and the filter device 111 are provided in the left rear pillar 22L. The filter housing member 110 is for housing the filter device 111. The filter housing member 110 is formed in a substantially rectangular parallelepiped shape that is long in the up-down direction. The filter housing member 110 is formed along the left rear pillar 22L (in a curved shape slightly bulging outward in the left-right direction). The right side surface of the filter housing member 110 is opened. A left side surface (introduction surface 110a) of the filter housing member 110 is formed in a mesh shape in which a large number of minute openings 110b are formed. Note that, in Fig. 5, illustration of the openings 110b is omitted.

The filter device 111 removes a removal target (dust and dirt) included in the outside air. The filter device 111 is formed in a substantially rectangular parallelepiped shape that is vertically long. Further, the filter device 111 is formed so that the outside air can pass left and right. The filter device 111 includes a filter that allows outside air to flow and collects a removal target. The filter device 111 is housed in the filter housing member 110.

The filter housing member 110 is fixed to the left rear pillar 22L in a state of housing the filter device 111. At this time, the opening 22La formed on the left side surface of the left rear pillar 22L is disposed so as to be covered by the filter housing member 110. Thus, the filter device 111 is disposed on a left rear side of the cabin 10 (on the left rear pillar 22L side out of left and right sides of the roof unit 30 in plan view), and can remove dust and dirt contained in the outside air introduced into the left rear pillar 22L.

Hereinafter, a state in which outside air is introduced from the left rear pillar 22L will be described. When air is sucked by a blower 130 disposed in the roof unit 30 to be described later, the outside air passes through the introduction surface 110a of the filter housing member 110, is filtered by the filter device 111 housed in the filter housing member 110 to remove dust, and then is introduced into the left rear pillar 22L through the opening 22La of the left rear pillar 22L. The outside air flows upward in the left rear pillar 22L and is guided to the roof unit 30.

Next, the structure of the right rear pillar 22R will be described.

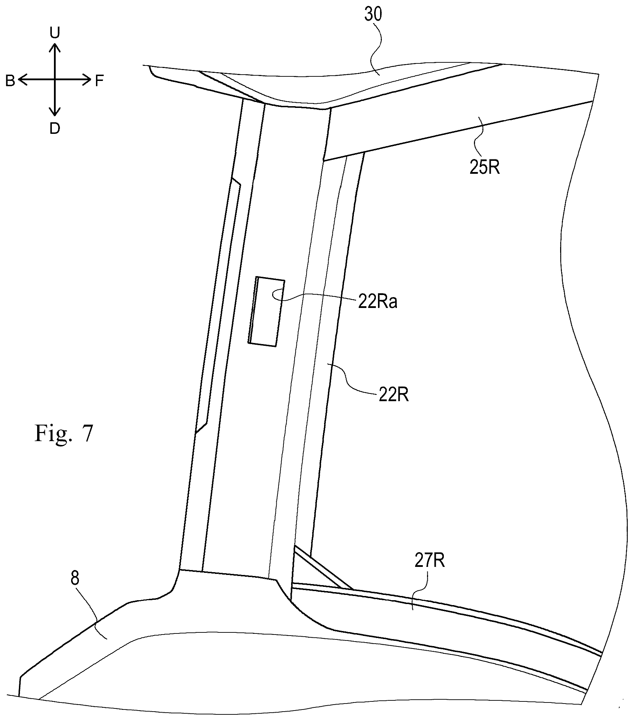

The right rear pillar 22R illustrated in Fig. 7 is formed symmetrically with the left rear pillar 22L. An opening 22Ra is formed in the right rear pillar 22R. The opening 22Ra is for taking in outside air introduced into a filter device 161 to be described later.

Note that, unlike the left rear pillar 22L, the filter housing member 110 and the filter device 111 (see Fig. 6) are not provided around the right rear pillar 22R, and dust and the like included in the outside air introduced into the right rear pillar 22R are removed in the roof unit 30 (filter unit 160 to be described later).

Next, a structure of the roof unit 30 will be described.

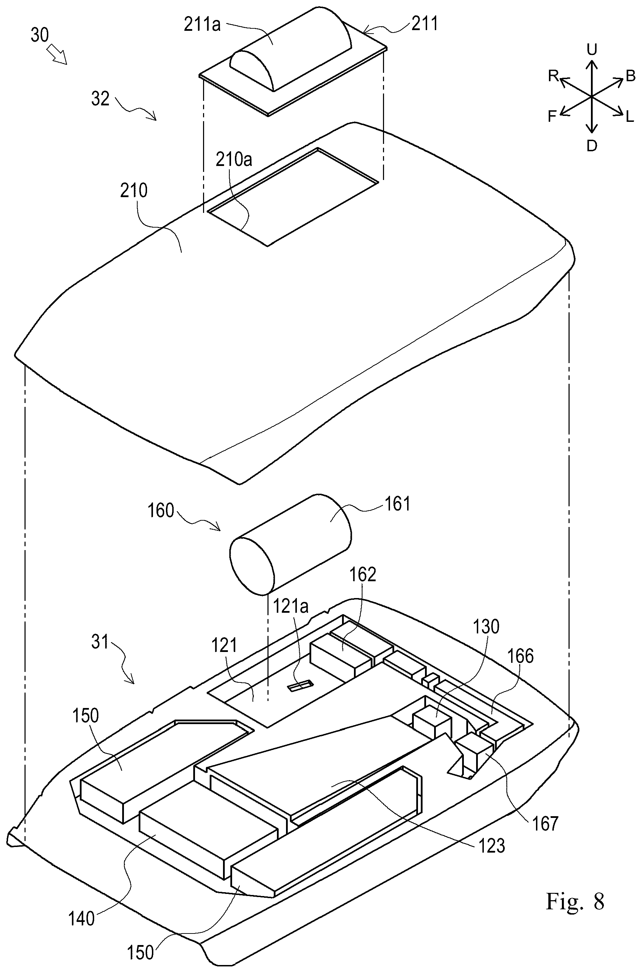

As described above, the roof unit 30 is formed in a hollow shape by the inner roof 31 and the outer roof 32. As illustrated in Fig. 8, the roof unit 30 (inner roof 31) houses devices such as the air conditioning unit 140. First, the configuration of the inner roof 31 will be described.

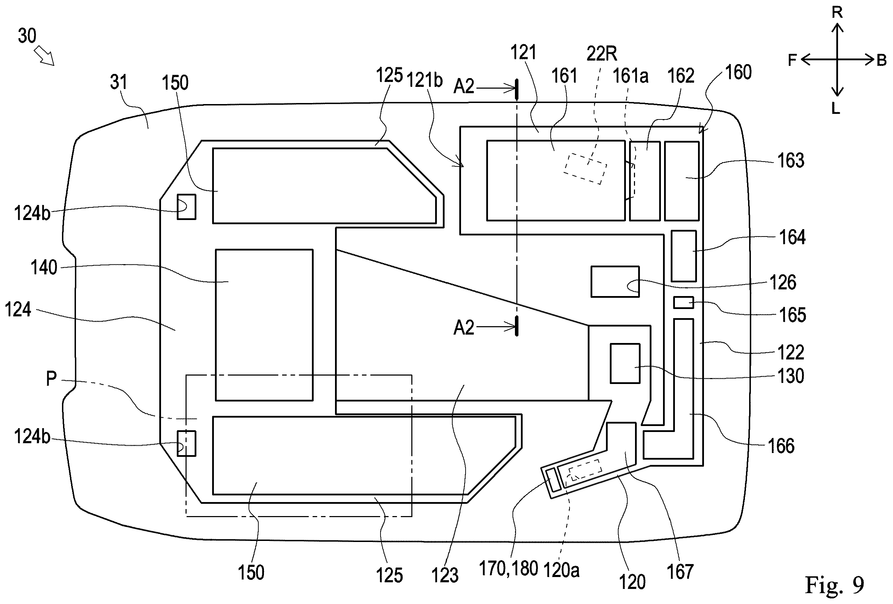

As illustrated in Figs. 8 and 9, the inner roof 31 is formed in a substantially rectangular shape in plan view having substantially the same size as the frame formed by the front beam 23, the rear beam 24, and the like. Further, the cross section of the inner roof 31 is partially formed in a hollow shape.

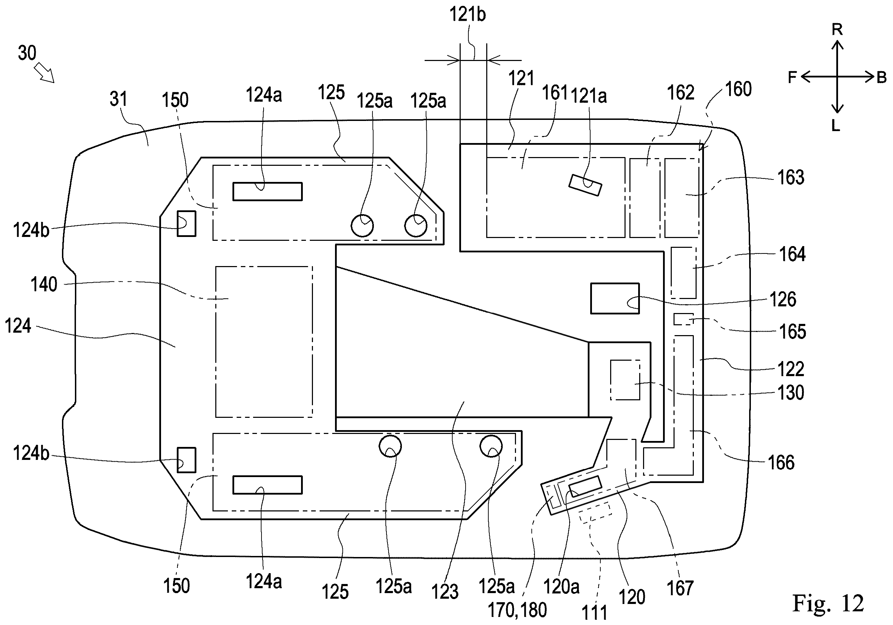

A plurality of recesses is formed on an upper surface of the inner roof 31. The inner roof 31 is covered with the outer roof 32. An internal space of the roof unit 30 is formed by being partitioned by the inner wall of the inner roof 31 and the inner wall of the outer roof 32. Fig. 12 schematically illustrates a shape of a recess or the like of the inner roof 31 for describing an internal space of the roof unit 30. As illustrated in Fig. 12, an introduction section 120, a filter housing section 121, a connecting section 122, a first guide section 123, an air conditioner housing section 124, and second guide sections 125 are formed in the internal space of the roof unit 30.

The introduction section 120 is a portion into which the outside air purified by the filter device 111 is introduced. The introduction section 120 is formed at a rear portion of the roof unit 30. More specifically, the introduction section 120 is formed closer to the rear side than a front-rear center of the roof unit 30 in the front-rear direction. Further, the introduction section 120 is formed so as to extend left and right from the vicinity of a left end to the vicinity of a left and right center of the roof unit 30. A blower 130 to be described later is housed at a right end of the introduction section 120. The left end of the introduction section 120 overlaps the left rear pillar 22L (see Fig. 3) in plan view. An outside air introduction port 120a is formed at the left end of the introduction section 120 so as to vertically penetrate the inner roof 31. The outside air introduction port 120a is connected to the upper end of the left rear pillar 22L. Thus, the outside air guided by the left rear pillar 22L is introduced into the introduction section 120 through the outside air introduction port 120a.

The filter housing section 121 is a section where a filter device 161 to be described later is housed, and outside air is introduced into the filter device 161. The filter housing section 121 is formed in a right rear portion of the roof unit 30. More specifically, the filter housing section 121 is formed closer to the rear side than the front-rear center of the roof unit 30 in the front-rear direction. Further, the filter housing section 121 is formed closer to the right side than the left-right center of the roof unit 30 in the left-right direction. The filter housing section 121 overlaps the right rear pillar 22R (see Fig. 3) in plan view. An outside air introduction port 121a is formed in the filter housing section 121 so as to vertically penetrate the inner roof 31. The outside air introduction port 121a is connected to the upper end of the right rear pillar 22R. Thus, the outside air guided by the right rear pillar 22R is introduced into the filter housing section 121 through the outside air introduction port 121a.

The connecting section 122 is a portion that connects the introduction section 120 and the filter housing section 121 to each other. The connecting section 122 is formed at a rear end of the roof unit 30. The connecting section 122 is formed to extend left and right. A right end of the connecting section 122 is connected to the filter housing section 121. Further, a left end of the connecting section 122 is connected to a left-right middle portion of the introduction section 120.

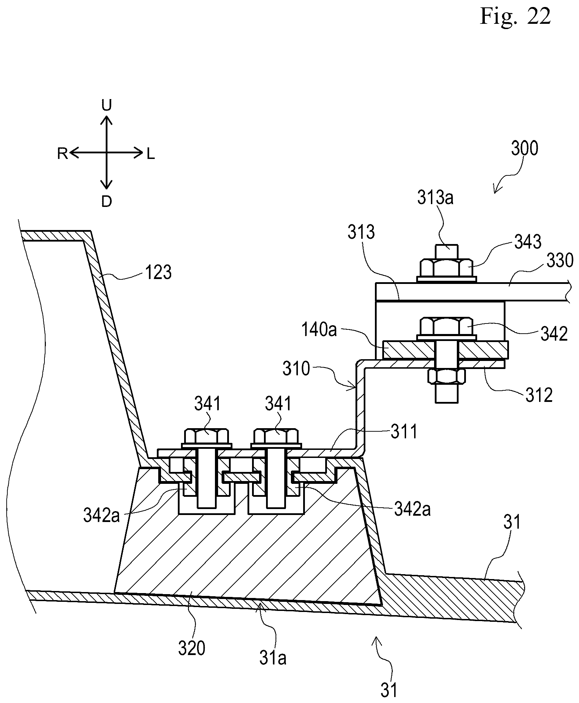

The first guide section 123 is formed in a tubular shape extending in the front-rear direction at a substantially central portion in the left-right direction of the roof unit 30. The first guide section 123 is formed by the upper surface of the inner roof 31 bulging upward with respect to the lower surface (see Figs. 8 and 22). The first guide section 123 can guide air in the front-rear direction. A rear end of the first guide section 123 is connected to a right end of the introduction section 120. A front end of the first guide section 123 is connected to the air conditioner housing section 124 to be described later. The first guide section 123 is formed such that the left and right width gradually increases from the rear to the front.

The air conditioner housing section 124 is formed in a front portion of the roof unit 30. More specifically, the air conditioner housing section 124 is formed closer to the front side than the front-rear center of the roof unit 30 in the front-rear direction. Further, the air conditioner housing section 124 is formed to extend from the vicinity of the left end to the vicinity of the right end of roof unit 30. The front end of the first guide section 123 is connected to the left and right central portion of the rear end of the air conditioner housing section 124. Air outlets 124a and hose insertion portions 124b are formed in the air conditioner housing section 124 so as to vertically penetrate the inner roof 31.

The air outlets 124a are respectively formed at left and right ends of the air conditioner housing section 124. The air outlets 124a are formed to be open to the interior space of the cabin 10. Thus, conditioned air from the air conditioning unit 140 to be described later is thus blown into the cabin 10 through the air outlets 124a.

The hose insertion portions 124b are portions through which hoses (heater hoses 410 and the like to be described later) for circulating a refrigerant between the air conditioning unit 140 and another device are inserted. The hose insertion portions 124b are respectively formed on the left and right sides of the air conditioner housing section 124. The hose insertion portion 124b on the left side is formed in the vicinity of the left front pillar 21L (see Fig. 4). For example, the hose insertion portion 124b on the left side is formed such that at least a part thereof overlaps with the left front pillar 21L in plan view. The hose insertion portion 124b on the right side is formed in the vicinity of the right front pillar 21R. For example, the hose insertion portion 124b on the right side is formed such that at least a part thereof overlaps with the right front pillar 21R in plan view.

The second guide sections 125 are respectively formed on left and right sides of the first guide section 123. The second guide sections 125 are respectively connected to the left and right ends of the air conditioner housing section 124. The second guide sections 125 are formed so as to extend rearward from the air conditioner housing section 124. Air outlets 125a are formed in the second guide sections 125 so as to vertically penetrate the inner roof 31.

Two air outlets 125a are formed in each of the left and right second guide sections 125. The air outlets 125a are formed to be open to the interior space of the cabin 10. Thus, conditioned air from the air conditioning unit 140 to be described later is thus blown into the cabin 10 through the air outlets 125a.

Further, the inner roof 31 is provided with an inside air introduction section 126 for introducing air in the interior space of the cabin 10 into the roof unit 30. The inside air introduction section 126 is formed so as to vertically penetrate the inner roof 31, and is formed to be open to the interior space of the cabin 10. The inside air introduction section 126 of the present embodiment is formed between the introduction section 120 and the filter housing section 121 in the left-right direction. Note that the inside air introduction section 126 may be formed at a position different from that of the present embodiment as long as the air in the interior space of the cabin 10 can be introduced into the roof unit 30.

As illustrated in Fig. 3, the inner roof 31 is fixed to the cabin frame 20 from above. More specifically, the inner roof 31 is placed on the front beam 23, the rear beam 24, and the like illustrated in Fig. 4, and the seal member 33 is elastically deformed by being sandwiched between the front beam 23 and the like and the inner roof 31. In this state, the inner roof 31 is fixed to the front beam 23 or the like by fasteners 34 such as bolts.

As described above, in the present embodiment, the front beam 23 and the like are not vertically sandwiched between the inner roof 31 and the outer roof 32, but a bottom surface of the inner roof 31 (roof unit 30) is placed on the front beam 23 and the like. Thus, since the front beam 23 and the like are disposed outside the roof unit 30, it is possible to increase an empty space of an internal space of the roof unit 30. In addition, by increasing the empty space, it is possible to secure a space for housing devices such as the air conditioning unit 140 without enlarging the size of the roof unit 30.

Further, the fasteners 34 for fixing the inner roof 31 are attached to various members constituting the upper portion of the cabin frame 20. Specifically, the fasteners 34 are attached to the front beam 23, the rear beam 24, the left side beam 25L, the right side beam 25R, and the frame reinforcing member 28.

By attaching the fasteners 34 to various members of the cabin frame 20, the inner roof 31 can be fixed to the cabin frame 20 in a well-balanced manner. **In** addition, the fasteners 34 can be easily disposed at equal intervals. Thus, the inner roof 31 can be pressed (elastically deformed) against the entire circumference of the seal member 33 in a well-balanced manner to improve the sealability.

Further, stays 34a are fixed to the frame reinforcing member 28 of the present embodiment, and the fasteners 34 are attached to the frame reinforcing member 28 via the respective stays 34a. Note that, in Fig. 4, a cross section of one of the stays 34a and other components viewed from the horizontal direction is enlarged. As illustrated in Fig. 4, the stay 34a is fixed to the upper surface of the frame reinforcing member 28 and is disposed between the inner roof 31 and the frame reinforcing member 28. The stay 34a has an inverted U-shaped cross section and is formed so that the fastener 34 can be attached inside.

By providing the stay 34a on the frame reinforcing member 28, the fastener 34 can be fixed at a relatively high position (compared to the frame reinforcing member 28). Note that the fastener 34 is not necessarily attached to the frame reinforcing member 28 via the stay 34a, and may be directly attached to the frame reinforcing member 28 (not via other members).

Next, members housed in the roof unit 30 will be described. As illustrated in Figs. 9 and 12, the blower 130, the air conditioning unit 140, first guide members 150, a filter unit 160, a switching mechanism 170, and a detection unit 180 are housed in the roof unit 30.

The blower 130 is a device for sending air to the air conditioning unit 140. The blower 130 is housed at the right end of the introduction section 120 (near the connecting section with the first guide section 123), and is disposed on the left side of the inside air introduction section 126. The blower 130 is connected to a rear end of the first guide section 123. The blower 130 can send the air introduced into the introduction section 120 toward the first guide section 123.

The air conditioning unit 140 is a device for performing air conditioning. The air conditioning unit 140 is housed in the air conditioner housing section 124 (front side of roof unit 30). An air introduction port (not illustrated) of the air conditioning unit 140 is connected to the front end of the first guide section 123.

The first guide members 150 guide air conditioned by the air conditioning unit 140 (air supplied into the cabin 10). The first guide members 150 are each formed in a tubular shape extending back and forth. A pair of left and right first guide members 150 is provided with the air conditioning unit 140 interposed therebetween. The first guide members 150 are housed in the roof unit 30 so as to extend from the left and right ends of the air conditioner housing section 124 to the respective second guide sections 125. Further, the first guide members 150 are disposed at positions shifted from the hose insertion portions 124b in plan view.

Front ends of the first guide members 150 are connected to respective air discharge ports (not illustrated) formed on left and right side surfaces of the air conditioning unit 140. In this way, the first guide members 150 are each disposed so as to extend rearward along a side portion of the roof unit 30 from a connecting portion with the air conditioning unit 140. A front portion of the first guide member 150 is connected to the air outlet 124a formed in the air conditioner housing section 124. Further, a rear portion of the first guide member 150 is connected to the air outlet 125a formed in the second guide section 125.

The filter unit 160 removes a removal target included in the outside air and guides the removal target to the introduction section 120. The filter unit 160 includes a filter device 161, an attachment member 162, a blower 163, a case 164, a flow meter 165, a second guide member 166, and an introduction member 167.

The filter device 161 illustrated in Figs. 8 and 9 removes a removal target included in the outside air. The filter device 161 is formed in a substantially cylindrical shape. Inside the filter device 161, a filter that allows the flow of outside air and collects a removal target is provided (not illustrated). The filter has higher dust removal target removal performance than the filter device 111 (see Fig. 6) provided in the left rear pillar 22L. In the present embodiment, the filter of the filter device 161 can remove more types of substances than the filter device 111. For example, the filter can remove vapor, aerosol, and the like in addition to dust and dirt (removal target of the filter device 111).

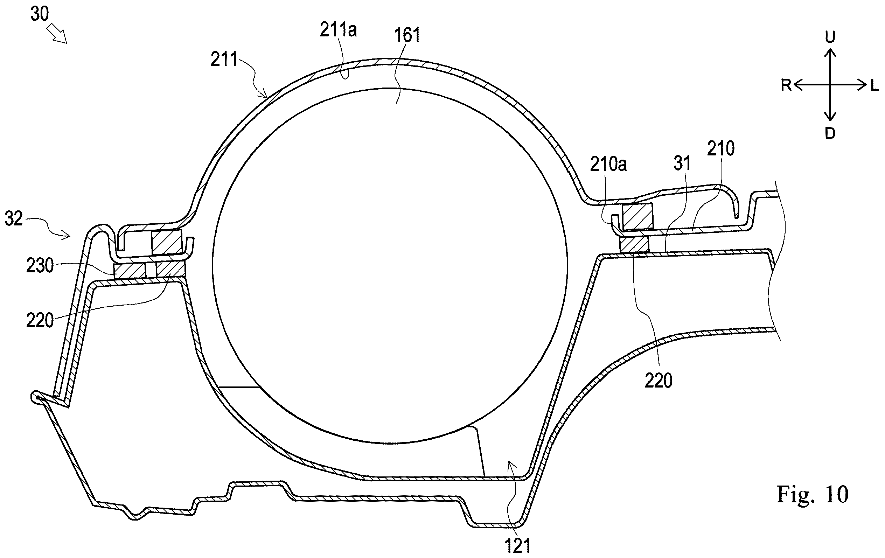

The filter device 161 is accommodated in the filter housing section 121 with its axis oriented in the front-rear direction. As illustrated in Fig. 10, a bottom portion (right rear portion of the inner roof 31) of the filter housing section 121 is formed to bulge downward according to the shape of the filter device 161. More specifically, the bottom portion of the filter housing section 121 is formed in a concave shape capable of housing a substantially lower half of the filter device 161. The filter device 161 is disposed in the bulging portion and is disposed above the right rear pillar 22R. The filter device 161 communicates with the right rear pillar 22R through the outside air introduction port 121a (see Fig. 12) of the filter housing section 121.

As illustrated in Fig. 9, the filter device 161 is disposed on the right side of the roof unit 30 (the right rear pillar 22R side of the left and right sides), and overlaps the right rear pillar 22R in plan view. Thus, the distance from the right rear pillar 22R to the filter device 161 can be made relatively short, so that the pressure loss when the outside air is introduced from the right rear pillar 22R to the filter device 161 can be reduced.

Further, the front-back width of the filter device 161 is smaller than the front-back width of the filter housing section 121. Thus, as illustrated in Figs. 9 and 12, a gap 121b is formed in the filter housing section 121 in which the filter device 161 is movable along the front-rear direction in a state where the filter device 161 is housed.

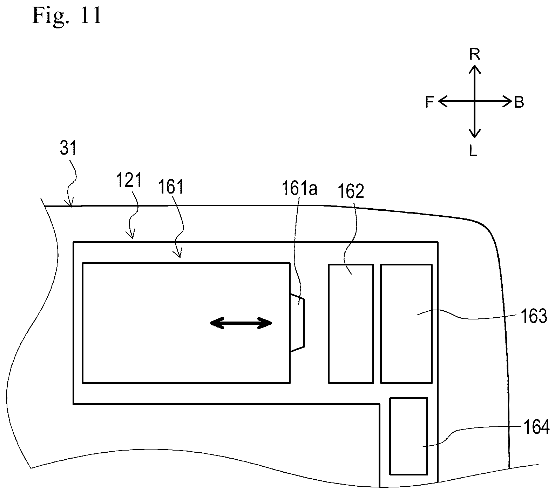

Fig. 11 illustrates the filter device 161 that has moved forward from the state illustrated in Fig. 9. As illustrated in Fig. 11, a protrusion 161a protruding rearward is formed on the filter device 161. The protrusion 161a is formed in a tubular shape. The filter device 161 can discharge the outside air from which dust and the like have been removed from a distal end of the protrusion 161a.

The attachment member 162 illustrated in Figs. 9 and 12 is a member to which the filter device 161 is detachably attached. The attachment member 162 is formed so as to be engageable with the protrusion 161a of the filter device 161. The attachment member 162 is housed in the filter housing section 121.

Note that Fig. 9 illustrates the filter device 161 in which the protrusion 161a is engaged with the attachment member 162 (attached to the attachment member 162). When the filter device 161 is moved forward, the engagement with the attachment member 162 is released (see Fig. 11).

As described above, in the present embodiment, the filter device 161 is moved in the front-rear direction, whereby the filter device 161 is attached to and detached from the attachment member 162. As described above, the gap 121b in which the filter device 161 is movable along the front-rear direction (allowing the movement in the front-rear direction) is formed in the filter housing section 121. With this configuration, the filter device 161 can be attached and detached using the gap 121b.

The blower 163 illustrated in Figs. 9 and 12 is a device for introducing outside air into the filter device 161. The blower 163 is connected to the filter device 161 via the attachment member 162. The blower 163 can send the outside air purified by the filter device 161 leftward. The blower 163 is accommodated in a right end of the connecting section 122 and is disposed on the right side of the roof unit 30 (the right rear pillar 22R side of the left and right sides). Further, the filter device 161 is disposed in the filter housing section 121 adjacent to the right end of the connecting section 122. By thus disposing the filter device 161 and the blower 163 adjacent to each other around the right rear pillar 22R, it is possible to reduce the pressure loss when the outside air flows from the opening 22Ra of the right rear pillar 22R to the blower 163.

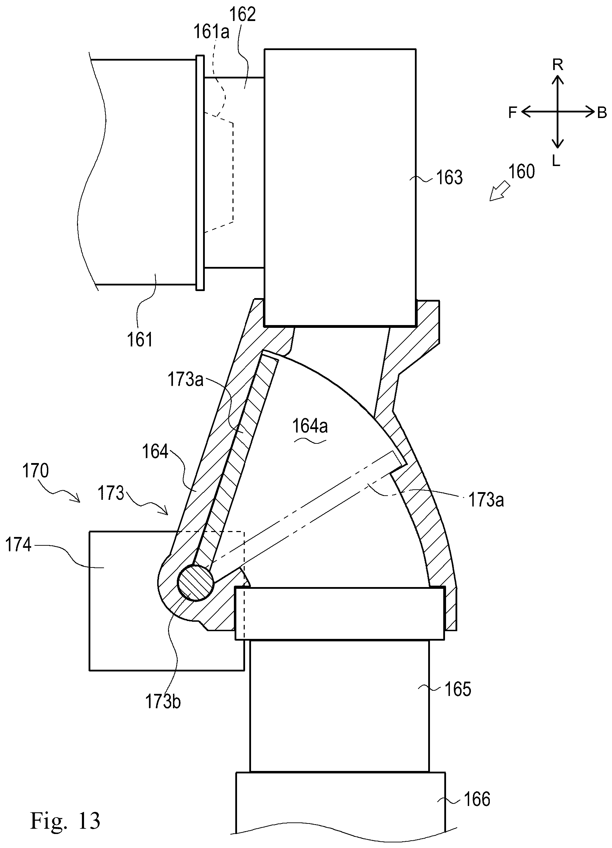

The case 164 is a member for connecting the blower 163 and the second guide member 166. The case 164 is disposed between the blower 163 and the second guide member 166 in the left-right direction. As illustrated in Fig. 13, the case 164 is formed in a hollow shape. Note that Fig. 13 is a cross-sectional plan view illustrating the case 164 and its periphery, and shapes of various members are schematically illustrated for convenience of description. In the case 164, a flow path 164a through which the outside air can pass to the left and right is formed.

The flow meter 165 illustrated in Figs. 9 and 13 measures the flow rate of the outside air that has passed through the filter device 161. The flow meter 165 is formed so that air can pass in the left-right direction. The flow meter 165 is housed in the connecting section 122 and is disposed on the left side of the case 164 (downstream side in the flowing direction of the outside air). Further, the flow meter 165 is connected to the case 164.

The second guide member 166 guides the outside air that has passed through the flow meter 165. The second guide member 166 is formed in a tubular shape with its axis oriented in the left-right direction. The second guide member 166 is housed in the connecting section 122 and is disposed on the left side of the flow meter 165. The right end of the second guide member 166 is connected to the filter device 161 and the blower 163 via the case 164 and the flow meter 165. Further, the left end of the second guide member 166 is connected to the introduction member 167. The second guide member 166 can guide the outside air sent from the blower 163 to the introduction member 167.

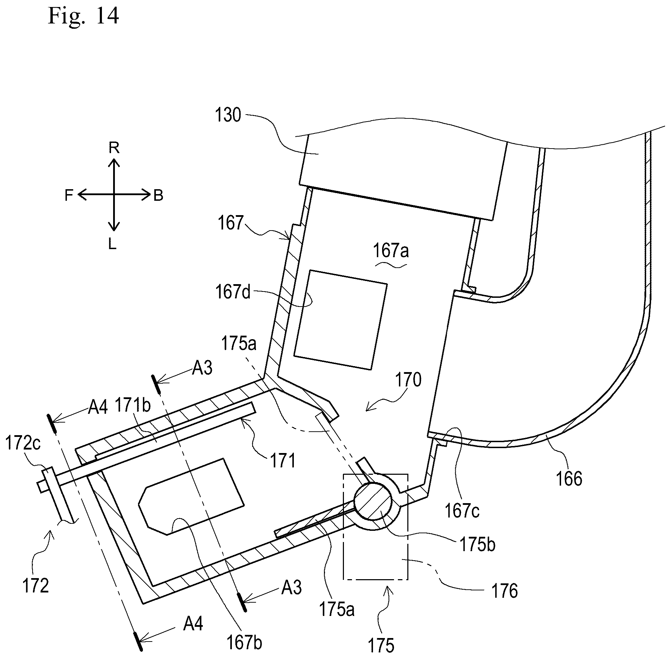

The introduction member 167 illustrated in Figs. 9 and 14 is a member into which the air purified by the filter devices 111 and 161 and the air from the interior space of the cabin 10 are introduced. The introduction member 167 is housed in the introduction section 120. The introduction member 167 is formed in a substantially box shape along the introduction section 120. A right end of the introduction member 167 is connected to the blower 130. Note that Fig. 14 is a cross-sectional plan view illustrating the introduction member 167 and its periphery, and shapes of various members are schematically illustrated for convenience of description. The introduction member 167 includes a flow path 167a, a first opening 167b, a second opening 167c, and a third opening 167d.

The flow path 167a is a portion through which air can circulate (an internal space of the introduction member 167). When the blower 130 is driven, the air flows through the flow path 167a toward the right (blower 130).

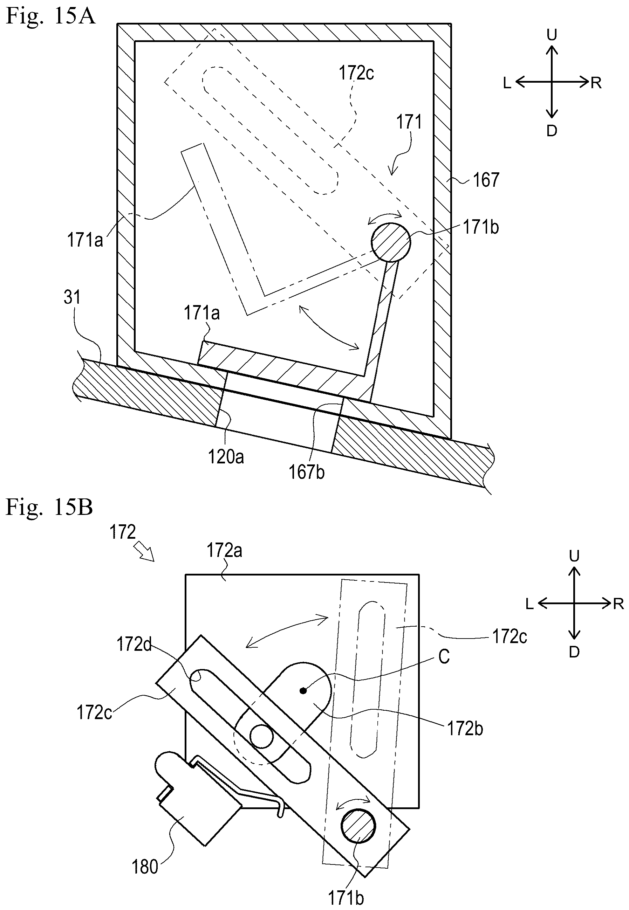

The first opening 167b illustrated in Figs. 14 and 15A is a portion into which the air purified by the filter device 111 is introduced. The first opening 167b is formed so as to vertically penetrate a bottom surface of the introduction member 167. The first opening 167b is formed so as to be adjacent to the upper side of the outside air introduction port 120a.

The second opening 167c illustrated in Fig. 14 is a portion into which the air purified by the filter device 161 is introduced. The second opening 167c is formed so as to penetrate the rear surface of the introduction member 167 in the front-rear direction, and is connected to the second guide member 166.

The third opening 167d is a portion into which air from the inside air introduction section 126 (see Fig. 12) is introduced. The third opening 167d is formed so as to vertically penetrate the upper surface and the bottom surface of the introduction member 167.

The second opening 167c and the third opening 167d are formed on the downstream side of the first opening 167b in the flowing direction of the air from the first opening 167b. In the present embodiment, the second opening 167c and the like are formed closer to the blower 130 side (right side) than the first opening 167b.

The switching mechanism 170 switches a flow path of air to the air conditioning unit 140. As illustrated in Figs. 13 and 14, the switching mechanism 170 includes a first switching unit 171, a first drive unit 172, a second switching unit 173, a second drive unit 174, a third switching unit 175, and a third drive unit 176.

The first switching unit 171 illustrated in Figs. 14 and 15A switches whether or not the air purified by the filter device 111 can be introduced into the first opening 167b. The first switching unit 171 is provided in the introduction member 167. The first switching unit 171 includes an opening/closing member 171a and a pivot shaft 171b.

The opening/closing member 171a illustrated in Fig. 15A is a member that opens and closes the first opening 167b. The opening/closing member 171a is disposed in the introduction member 167. The opening/closing member 171a is formed in a substantially L shape when viewed from the axial direction of the pivot shaft 171b. Note that, in Fig. 14, illustration of the opening/closing member 171a is omitted.

The pivot shaft 171b illustrated in Figs. 14, 15A, and 15B is disposed with its axis oriented in the horizontal direction. The pivot shaft 171b is rotatably supported by a bearing (not illustrated). One end (upper end in Fig. 15A) of the opening/closing member 171a is fixed to the pivot shaft 171b. A part (a front part in Fig. 14) of the pivot shaft 171b is disposed so as to protrude to the outside of the introduction member 167.

The first drive unit 172 illustrated in Fig. 15B drives the first switching unit 171 (drive source). The first drive unit 172 includes a motor 172a and a connection member 172c.

The motor 172a is for rotating the pivot shaft 171b. The motor 172a is disposed outside the introduction member 167. The motor 172a includes a rotation unit 172b that rotates with the drive of the motor 172a. The rotation unit 172b is formed so as to extend in a predetermined direction (lower left in Fig. 15B) from the rotational center C.

The connection member 172c is a member that connects the motor 172a and the pivot shaft 171b. The connection member 172c is formed in a longitudinal shape. The connection member 172c is disposed outside the introduction member 167. One end (lower end in Fig. 15B) of the connection member 172c is fixed to the pivot shaft 171b. A long hole 172d is formed in the connection member 172c. A protrusion protruding from the rotation unit 172b (a portion extending from the rotational center C) is inserted into the long hole 172d.

The first switching unit 171 illustrated in Fig. 15A can open and close the first opening 167b by driving the motor 172a. More specifically, when the motor 172a illustrated in Fig. 15B is driven, the rotation unit 172b slides in the long hole 172d while rotating about the rotational center C. The connection member 172c and the pivot shaft 171b rotate with the rotation of the rotation unit 172b or the like. The opening/closing member 171a rotates with the rotation of the pivot shaft 171b to open and close the first opening 167b. Thus, the first switching unit 171 can switch between a state in which air can be introduced into the introduction member 167 through the first opening 167b (a state of the opening/closing member 171a indicated by a two-dot chain line in Fig. 15A) and a state in which air cannot be introduced (a state of the opening/closing member 171a indicated by a solid line in Fig. 15A).

Further, in the present embodiment, the rotation unit 172b slides in the long hole 172d, so that the opening and closing operation of the opening/closing member 171a can be performed without bidirectionally rotating the rotation unit 172b. For example, the opening and closing operation of the opening/closing member 171a can be performed by rotating the rotation unit 172b only in the counterclockwise direction in Fig. 15B. Thus, the first opening 167b can be opened and closed using the motor 172a having a simple configuration.

The second switching unit 173 illustrated in Fig. 13 is for switching whether or not the air purified by the filter device 161 can be introduced into the second opening 167c. The second switching unit 173 is provided in the case 164. The second switching unit 173 includes an opening/closing member 173a and a pivot shaft 173b.

The opening/closing member 173a is a member that opens and closes the flow path 164a (connecting portion between the blower 163 and the second guide member 166) of the case 164. The opening/closing member 173a is formed in a flat plate shape and is housed in the case 164. The pivot shaft 173b is disposed with its axis oriented in the vertical direction. The pivot shaft 173b rotatably supports the opening/closing member 173a.

The second drive unit 174 drives the second switching unit 173 (drive source). The second drive unit 174 includes a motor in which an output shaft (not illustrated) is disposed concentrically with the pivot shaft 173b. The second drive unit 174 is connected to the pivot shaft 173b, and can rotate the pivot shaft 173b.

The second switching unit 173 can pivot the opening/closing member 173a about the axis of the pivot shaft 173b by the second drive unit 174 driving the second switching unit 173. Thus, the second switching unit 173 can switch between a state in which the flow path 164a is opened and air can be introduced into the second opening 167c (a state of the opening/closing member 173a indicated by a solid line in Fig. 13) and a state in which the flow path 164a is closed and air cannot be introduced into the second opening 167c (a state of the opening/closing member 173a indicated by a two-dot chain line in Fig. 13).

The third switching unit 175 illustrated in Fig. 14 switches whether or not air can flow between the first opening 167b and the second and the third openings 167c and 167d in the flowing direction of air flow from the first opening 167b. The third switching unit 175 is provided in the introduction member 167. The third switching unit 175 includes an opening/closing member 175a and a pivot shaft 175b. The third drive unit 176 drives the third switching unit 175 (drive source). Note that the third switching unit 175 and third drive unit 176 are configured similarly to the second switching unit 173 and the second drive unit 174, and thus detailed description of the third switching unit 175 and the third drive unit 176 is omitted.

The third switching unit 175 can pivot the opening/closing member 175a about the axis of the pivot shaft 175b by the third drive unit 176 driving the third switching unit 175. Thus, the third switching unit 175 can switch between a state in which the flow path 167a is opened and air can circulate (a state of the opening/closing member 175a indicated by a solid line in Fig. 14) and a state in which the flow path 167a is closed and air cannot circulate (a state of the opening/closing member 175a indicated by a two-dot chain line in Fig. 14).

Note that the above-described configuration of the switching mechanism 170 is an example, and can be changed as appropriate. For example, the first switching unit 171 may directly rotate the pivot shaft 171b by connecting the motor 172a and the pivot shaft 171b without interposing the connection member 172c. Further, the first switching unit 171, the second switching unit 173, and the third switching unit 175 can switch whether or not air can flow by sliding the opening/closing member 171a or the like in the vertical direction or the horizontal direction instead of pivoting the opening/closing member. In addition, the first switching unit 171, the second switching unit 173, and the third switching unit 175 may be disposed at positions different from those in the present embodiment.

The detection unit 180 illustrated in Fig. 15B detects the switching state of the first switching unit 171. The detection unit 180 is disposed on one side (the left side in Fig. 15B) of the connection member 172c. The detection unit 180 includes, for example, a micro switch. The detection unit 180 is pressed by the connection member 172c in a state where the opening/closing member 171a closes the first opening 167b, and the pressing is released in a state where the first opening 167b is opened. Thus, the detection unit 180 can detect the opened/closed state of the first opening 167b by the opening/closing member 171a. For example, the detection unit 180 can detect whether or not the first opening 167b is closed.

Note that the above-described configuration of the detection unit 180 is an example, and can be appropriately changed as necessary. For example, it is also possible to add the detection unit 180 so as to detect a state in which the first opening 167b is completely opened, and to detect a state in which the first opening 167b is opened and a state in which the first opening 167b is closed. In addition, the detection unit 180 is not necessarily configured by a micro switch, and can detect an open or closed state of first opening 167b by another sensor.

Next, a flow path of air in the roof unit 30 configured as described above will be described. In the present embodiment, a path through which the air purified by the filter device 111 flows, a path through which the air purified by the filter device 161 flows, and a path through which air from the interior space of the cabin 10 flows are switched by the switching mechanism 170.

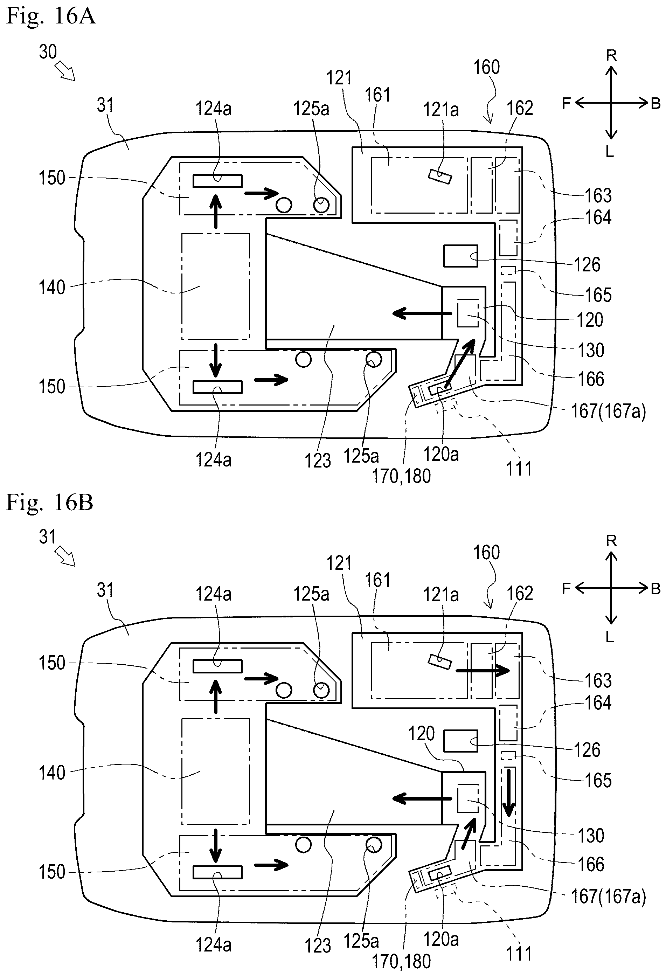

Hereinafter, first, a path through which the air purified by the filter device 111 flows will be described with reference to Fig. 16A.

In a case where the air purified by the filter device 111 is circulated in the roof unit 30, the second switching unit 173 is switched to a state in which air cannot be circulated (see the opening/closing member 173a indicated by the two-dot chain line in Fig. 13). Further, the first switching unit 171 and the third switching unit 175 are switched to a state in which air can flow (refer to the opening/closing member 171a indicated by the two-dot chain line in Fig. 15A and the opening/closing member 175a indicated by the solid line in Fig. 14).

In this state, the blower 130 and the air conditioning unit 140 are operated. Thus, the outside air passes through the filter device 111 and is introduced into the introduction section 120 via the opening 22La (see Fig. 6) of the left rear pillar 22L and the outside air introduction port 120a. The outside air flows into the introduction member 167 through the first opening 167b (see Fig. 15A), flows rightward through the flow path 167a (introduction section 120), and then flows into the first guide section 123.

The outside air flowing through the first guide section 123 is air-conditioned (temperature adjustment or the like) by the air conditioning unit 140. The outside air (conditioned air) conditioned by the air conditioning unit 140 flows through the first guide members 150 to the air outlets 124a and the air outlets 125a, and is supplied into the cabin 10. Thus, air introduced into the left rear pillar 22L (air purified by the filter device 111) can be used to air-condition the interior of the cabin 10. Note that in a case where the air introduced from the left rear pillar 22L is circulated in the roof unit 30, the blower 163 is stopped.

Further, the first guide members 150 of the present embodiment extend rearward from the air conditioning unit 140 and are connected to the air outlets 125a. The air outlets 125a are disposed at positions closer to the seat 11 (see Fig. 1) in the front-rear direction than the air outlets 124a on the front side. Thus, by blowing out the conditioned air from the air outlets 125a, the conditioned air is applied from a position relatively close to the face or nape of the operator seated on the seat 11, and the comfort of the operator can be improved. For example, in a case where the air conditioning unit 140 performs the cooling operation, directing the conditioned air to the nape or the like of the operator allows the operator to effectively feel coolness.

Next, a path through which the air purified by the filter device 161 flows will be described with reference to Fig. 16B.

In a case where the air purified by the filter device 161 is circulated in the roof unit 30, the second switching unit 173 is switched to a state in which the air can be circulated (see the opening/closing member 173a indicated by the solid line in Fig. 13). In addition, at least one of the first switching unit 171 or the third switching unit 175 is switched to a state in which air cannot flow. For example, both the first switching unit 171 and the third switching unit 175 are switched to a state in which air cannot flow (refer to the opening/closing member 171a indicated by the solid line in Fig. 15A and the opening/closing member 175a indicated by the two-dot chain line in Fig. 14).

In this state, the blowers 130 and 163 and the air conditioning unit 140 are operated. Thus, the outside air is introduced into the filter device 161 illustrated in Fig. 16B via the opening 22Ra (see Fig. 7) of the right rear pillar 22R and the outside air introduction port 121a of the filter housing section 121. After being purified by the filter device 161, the outside air passes through the attachment member 162, the blower 163, and the like, and is introduced into the introduction member 167 (introduction section 120) via the second guide member 166. The flow rate of the outside air is measured by the flow meter 165. By measuring the flow rate of the outside air in this way, various controls can be performed using the measurement result. For example, the pressure (internal pressure) in the cabin 10 can be controlled.

Similarly to the case where the air purified by the filter device 111 flows (the case of Fig. 16A), the outside air introduced into the introduction member 167 flows through the first guide section 123, is air-conditioned by the air conditioning unit 140, and is blown out into the cabin 10 through the air outlets 124a or the like. Thus, air conditioning in the cabin 10 can be performed using the air purified by the filter device 161.

As described above, since the filter device 161 has higher removal performance for removal targets than the filter device 111, it is possible to supply cleaner air to the interior of the cabin 10 by circulating outside air from the outside air introduction port 121a of the filter housing section 121.

The filter of the filter device 161 is less likely to allow outside air to pass than the filter of the filter device 111. For example, the filter of the filter device 161 has a finer mesh than the filter of the filter device 111. Thus, in the present embodiment, the blower 163 is also operated in addition to the blower 130 to secure the supply amount of outside air to the air conditioning unit 140.

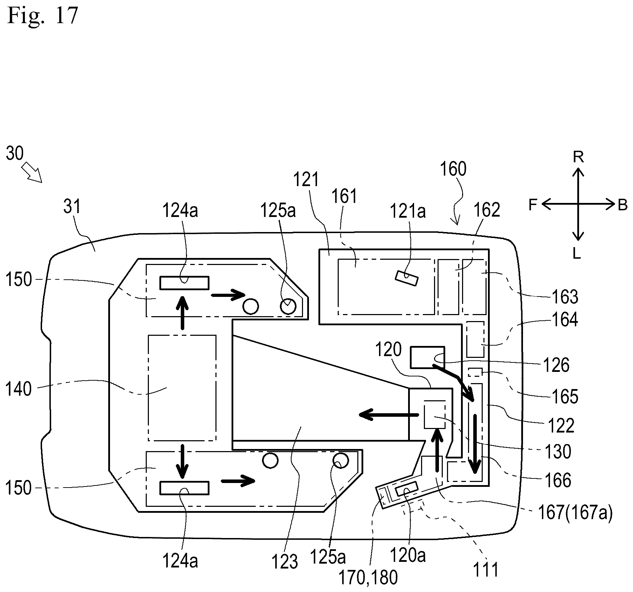

Next, a path through which air flows from the interior space of the cabin 10 will be described with reference to Fig. 17.

In a case where air is circulated in the roof unit 30 from the interior space of the cabin 10, the second switching unit 173 is switched to a state in which the air cannot be circulated (see the opening/closing member 173a indicated by the two-dot chain line in Fig. 13). In addition, at least one of the first switching unit 171 or the third switching unit 175 is switched to a state in which air cannot flow. For example, both the first switching unit 171 and the third switching unit 175 are switched to a state in which air cannot flow (refer to the opening/closing member 171a indicated by the solid line in Fig. 15A and the opening/closing member 175a indicated by the two-dot chain line in Fig. 14).

In this state, the blower 130 and the air conditioning unit 140 are operated. Air in the interior space of the cabin 10 is introduced into the roof unit 30 via the inside air introduction section 126 illustrated in Fig. 17. The air flows through the gap in the roof unit 30 and is introduced into the introduction member 167 through the third opening 167d (see Fig. 14) of the introduction member 167.

Similarly to the case where the air purified by the filter device 111 flows (the case of Fig. 16A), the air introduced into the introduction member 167 flows through the first guide section 123, is air-conditioned by the air conditioning unit 140, and is blown out into the cabin 10 through the air outlets 124a or the like. Thus, air can be circulated between the interior of the cabin 10 and the roof unit 30 to perform air conditioning in the interior of the cabin 10.

As described above, in the present embodiment, it is possible to switch between a state in which the air purified by the filter device 111 is circulated (state of Fig. 16A), a state in which the air purified by the filter device 161 is circulated (state of Fig. 16B), and a state in which the air from the interior space of the cabin 10 is circulated (state of Fig. 17). Further, this state can be arbitrarily switched by a worker using an operation tool (not illustrated) provided in the cabin 10.

For example, in a case where it is considered that the outside air is relatively dirty from the work content in the tractor 1, the traveling place, and the like, the outside air purified by the filter device 161 can be introduced into the roof unit 30 (see Fig. 16B). Further, in a case where it is considered that the outside air is relatively uncontaminated, the outside air purified by the filter device 111 can be introduced (see Fig. 16A). Furthermore, in a case where a temperature difference between the inside and the outside of the cabin 10 is relatively large, for example, air is circulated between the interior of the cabin 10 and the roof unit 30, so that the interior of the cabin 10 can be easily maintained at a set temperature.

As described above, in the present embodiment, the flow path of air in the roof unit 30 can be switched as necessary. This can improve convenience.

As illustrated in Figs. 16A, 16B, and 17, in the present embodiment, the air purified by the filter device 111, the air purified by the filter device 161, and the air from the interior space of the cabin 10 are introduced into the first guide section 123 via the introduction member 167. Thus, the air can be introduced into the air conditioning unit 140 using the common path (the introduction member 167 and the first guide section 123), so that the flow path of the air can be simplified.

As illustrated in Fig. 9, in the present embodiment, the filter device 161, the inside air introduction section 126, the blower 130, and the introduction member 167 are disposed in parallel along the left-right direction in plan view. This makes it possible to effectively utilize spaces on the front side and the rear side of the filter device 161, the inside air introduction section 126, and the like. For example, as in the present embodiment, it is possible to form a flow path (see Fig. 16B) of the air purified by the filter device 161 by utilizing a space on the rear side such as the inside air introduction section 126.

In the present embodiment, in the case where the air from the filter devices 111 and 161 flows through the roof unit 30 (see Figs. 16A and 16B), the air from the interior space of the cabin 10 is introduced into the roof unit 30 via the inside air introduction section 126. Thus, even in a case where the outside air is introduced, the air in the cabin 10 whose temperature has been adjusted can be supplied to the air conditioning unit 140 to easily maintain the interior of the cabin 10 at the set temperature.

Next, a configuration of the outer roof 32 will be described.

The outer roof 32 illustrated in Figs. 8 and 10 includes a main body 210 and a cover 211. Note that Fig. 10 is a cross-sectional view of the roof unit 30 taken along line A2 illustrated in Fig. 9. The main body 210 is formed in a substantially quadrangular shape having substantially the same size as the inner roof 31 in plan view so as to cover the inner roof 31 from above. The main body 210 is fixed to the inner roof 31. In the present embodiment, the main body 210 is fixed to the inner roof 31 using a tool. An opening 210a is formed in the main body 210.

The opening 210a opens so as to communicate with the internal space (more specifically, the filter housing section 121) of the roof unit 30. The opening 210a is formed in the right rear portion of the main body 210. The opening 210a is formed in a rectangular shape slightly larger than the filter device 161 in plan view. Therefore, the filter device 161 can vertically pass through the opening 210a.

With the configuration of the opening 210a, even if the filter device 111 is enlarged, the filter device 161 can be naturally installed in the roof unit 30. More specifically, as illustrated in Fig. 10, the filter device 161 can be caused to protrude upward from the main body 210 via the opening 210a, and interference between the outer roof 32 and the filter device 161 can be avoided. Further, the ceiling height on the rear side of the roof unit 30 can be secured by making the filter device 161 project upward.

The cover 211 is a portion for opening and closing the opening 210a. The cover 211 is formed in a rectangular shape in plan view which is slightly larger than the opening 210a. The cover 211 includes a convex portion 211a that bulges upward. The convex portion 211a is formed at a middle portion between the left and right of the cover 211. The convex portion 211a bulges upward according to the shape of the filter device 161. More specifically, the convex portion 211a bulges upward to such an extent that a portion of the filter device 161 protruding upward from the main body 210 can be covered from above.

The cover 211 is detachably fixed to the main body 210 (around the opening 210a). In the present embodiment, the cover 211 is configured to be attachable to and detachable from the main body 210 without using a tool. For example, the cover 211 is attached to the main body 210 via a knob bolt or the like by manually turning the knob bolt. By attaching the cover 211 to the main body 210 in this manner, the opening 210a can be closed to protect the filter device 161.

Further, when the cover 211 is removed from the main body 210, opening 210a can be opened. Thus, since the filter device 161 is exposed to the outside of the roof unit 30 through the opening 210a, maintenance of the filter device 161 can be performed without removing the main body 210 from the inner roof 31, and workability can be improved.

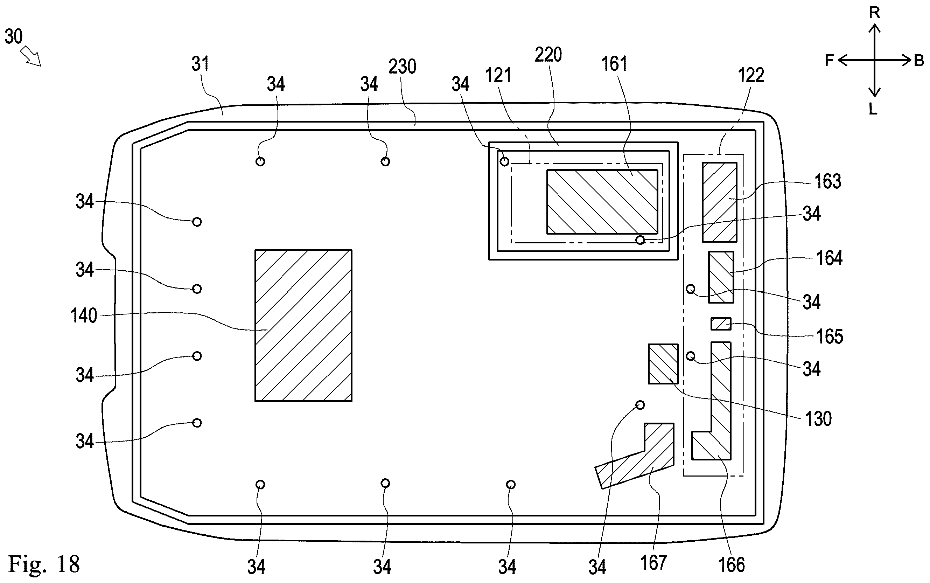

As illustrated in Figs. 10 and 18, the first seal member 220 and the second seal member 230 are provided between the outer roof 32 and the inner roof 31 configured as described above. Note that, for the sake of description, Fig. 18 schematically illustrates a shape of a device (such as the air conditioning unit 140) in the roof unit 30 and a shape of the roof unit 30. Hereinafter, the first seal member 220 and the second seal member 230 will be described.

The first seal member 220 and the second seal member 230 seal between the outer roof 32 and the inner roof 31. The first seal member 220 and the second seal member 230 are made of an elastically deformable material (for example, rubber).

The first seal member 220 is provided to seal at least a space in which the filter device 161 is disposed. The first seal member 220 of the present embodiment is disposed so as to surround the filter housing section 121 in plan view.

The second seal member 230 is provided so as to seal at least a space (connecting section 122) in which the second guide member 166 is disposed. The second seal member 230 of the present embodiment is disposed along the outer edge of the outer roof 32 in plan view. The second seal member 230 is disposed so as to surround various members (blowers 130 and 163, air conditioning unit 140, and the like) housed in the roof unit 30 in plan view. The filter device 161 and the first seal member 220 are disposed inside the second seal member 230 in plan view.

The first seal member 220 and the second seal member 230 are sandwiched and elastically deformed between the inner roof 31 and the outer roof 32 (main body 210) in a state of being disposed on the inner roof 31. Thus, it is possible to suppress water from entering a region (first seal region) surrounded by the first seal member 220 in plan view, and to suppress wetting of the filter device 111 with water. In addition, it is possible to suppress water from entering a region (second seal region) surrounded by the second seal member 230 in plan view, and it is possible to suppress occurrence of a malfunction in the air conditioning unit 140, the blower 130, and the like. As described above, in the present embodiment, the filter housing section 121 in which the filter device 161 is disposed, the connecting section 122 in which the second guide member 166 and the like are disposed, and the like are individually sealed by the first seal member 220 and the second seal member 230.

Further, since the first seal member 220 is disposed inside the second seal member 230 (second seal region) in plan view, it is possible to suppress water from entering the region (first seal region) surrounded by the first seal member 220 by the plurality of seal members (first seal member 220 and second seal member 230).

As illustrated in Fig. 18, in the present embodiment, the fasteners 34 for fixing the inner roof 31 to the cabin frame 20 are disposed inside the second seal member 230 in plan view. The fasteners 34 are disposed so as to be displaced from various members (blowers 130 and 163, air conditioning unit 140, second guide member 166, and the like) housed in the internal space of the roof unit 30 in plan view. With this configuration, the blower 130 and the like are less likely to interfere when the inner roof 31 is fixed with the fasteners 34 using a tool, so that the inner roof 31 can be easily fixed to the cabin frame 20.

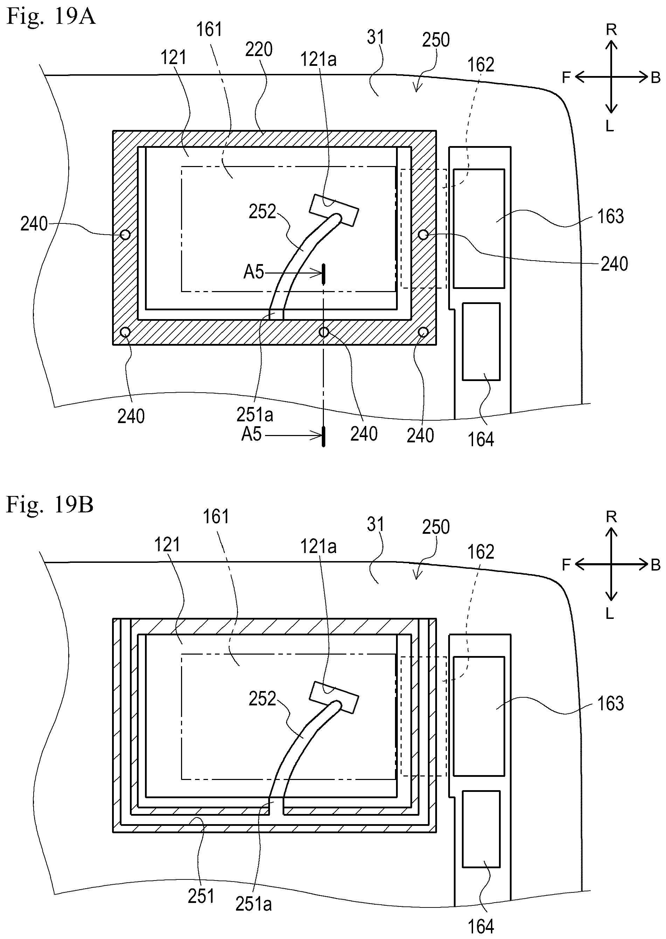

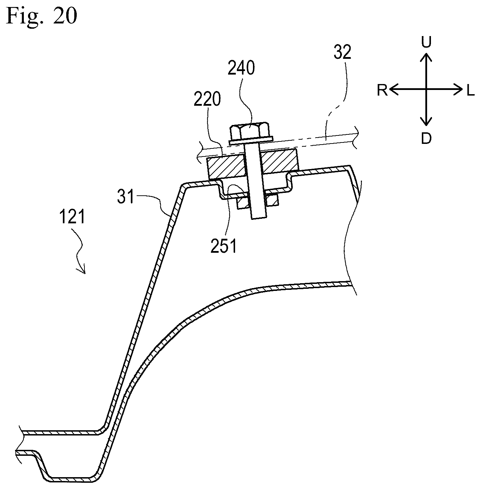

As illustrated in Figs. 19A and 20, in the present embodiment, fasteners 240 (bolts or the like) for fixing the inner roof 31 and the outer roof 32 are disposed so as to pass through the first seal member 220. Thus, the outer roof 32 is pressed against the first seal member 220 with a strong force, and the sealability of the filter housing section 121 can be improved. Note that although not illustrated, the inner roof 31 and the outer roof 32 are fixed to each other by bolts or the like in a region other than the periphery of the filter housing section 121.

Further, in the present embodiment, there is provided a discharge portion 250 that discharges water that has entered the upper surface of the inner roof 31 (contact portion with the first seal member 220) from between the fastener 240 and the first seal member 220 to the outside of the roof unit 30. Hereinafter, the configuration of the discharge portion 250 will be described with reference to Figs. 19A, 19B, and 20.

The discharge portion 250 includes a groove 251 and a pipe 252. The groove 251 illustrated in Figs. 19B and 20 guides water that has entered the upper surface of the inner roof 31 to the filter housing section 121 (first seal region surrounded by the first seal member 220). The groove 251 is formed around the filter housing section 121. Note that, in Fig. 19B, a portion (contact portion) in contact with the first seal member 220 in the upper surface of the inner roof 31 is indicated by hatching.

As illustrated in Figs. 19B and 20, the groove 251 of the present embodiment is formed in a substantially U shape in plan view along the periphery of the filter housing section 121. The groove 251 is formed by the upper surface of the inner roof 31 being recessed downward. Further, an extending portion 251a extending toward the filter housing section 121 is formed in the groove 251. Note that, in Fig. 10, illustration of the groove 251 is omitted.

The first seal member 220 is placed on the inner roof 31 so as to overlap the groove 251 in plan view. As described above, the groove 251 of the present embodiment is formed in a portion (contact portion) of the inner roof 31 in contact with the first seal member 220. Note that the configuration (shape and the like) of the groove 251 described above is an example, and can be changed as appropriate. For example, the groove 251 may be formed in a rectangular annular shape in plan view so as to surround the filter housing section 121. Further, the groove 251 may be fixed to the upper surface of the inner roof 31 and formed in another member different from the outer roof 32.

The pipe 252 illustrated in Figs. 19A and 19B guides water from the groove 251 to the outside air introduction port 121a. One end of the pipe 252 is connected to the extending portion 251a of the groove 251. Further, the other end of the pipe 252 is disposed in the outside air introduction port 121a.

In a case where water enters the upper surface of the inner roof 31 from between the fastener 240 and the first seal member 220 illustrated in Fig. 20, the discharge portion 250 can guide the water to the extending portion 251a illustrated in Fig. 19B by the groove 251. The water guided to the extending portion 251a is guided to the outside air introduction port 121a by the pipe 252, and is discharged to the outside of the roof unit 30 through the outside air introduction port 121a. Accordingly, it is possible to suppress accumulation of water in the internal space of the roof unit 30. In addition, since the discharge portion 250 guides water by the pipe 252 in the filter housing section 121, it is possible to suppress wetting of the filter device 161 with water.

Further, in the present embodiment, water can be discharged by the discharge portion 250 using the outside air introduction port 121a for introducing outside air. Thus, for example, the number of holes formed in the inner roof 31 can be reduced, and the strength of the inner roof 31 can be secured.

Note that the above-described configuration of the discharge portion 250 is an example, and can be changed as appropriate. For example, the pipe 252 can be omitted from the discharge portion 250. In addition, the discharge portion 250 can guide the water that has entered the upper surface of the inner roof 31 to the outside of the first seal member 220 and discharge the water to the outside of the roof unit 30.

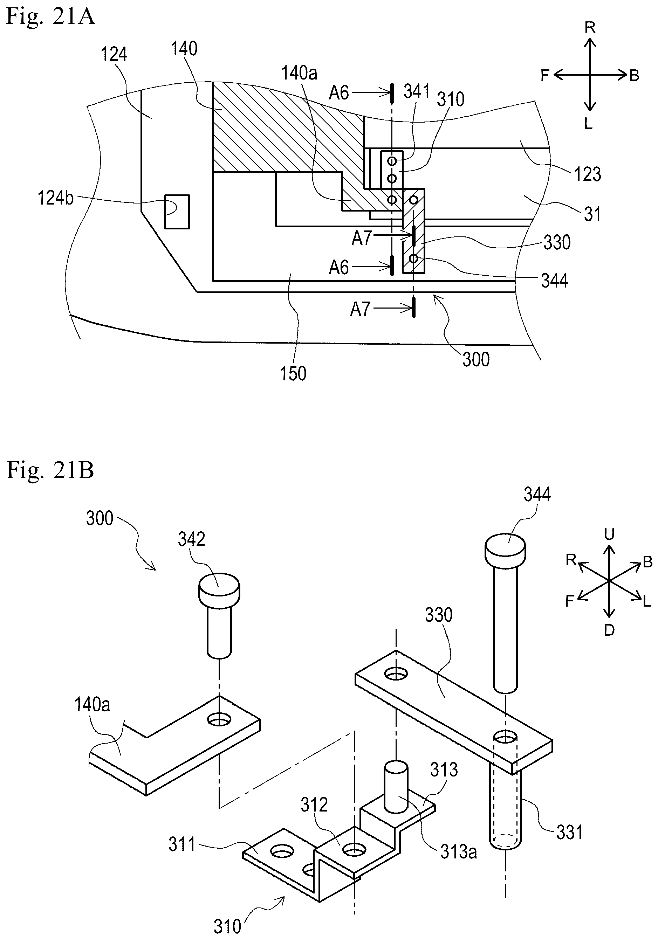

Hereinafter, an air conditioner fixing structure 300 for fixing the air conditioning unit 140 will be described with reference to Figs. 21A to 23B. Note that Figs. 21A and 21B are plan views illustrating details of a left front portion (portion P illustrated in Fig. 9) of the roof unit 30. Further, in Figs. 21A and 21B, in order to make various members easy to see, some members (air conditioning unit 140 and the like) are indicated by hatching.

The air conditioner fixing structure 300 is for fixing a left rear portion and a right rear portion of the air conditioning unit 140. Note that because the structure for fixing the right rear portion of the air conditioning unit 140 is similar to (laterally symmetrical with) the structure for fixing the left rear portion, the air conditioner fixing structure 300 will be described below by taking the structure for fixing the left rear portion of the air conditioning unit 140 as an example, and the description of the structure for fixing the right rear portion of the air conditioning unit 140 will be omitted. The air conditioner fixing structure 300 includes a first air conditioner fixing member 310, a reinforcing member 320, and a second air conditioner fixing member 330.

The first air conditioner fixing member 310 illustrated in Figs. 21A, 21B, and 22 is for fixing the air conditioning unit 140 to the upper surface of the inner roof 31. A protrusion 140a protruding rearward is formed at a left rear end of the air conditioning unit 140 of the present embodiment, and the first air conditioner fixing member 310 is configured to fix the protrusion 140a to the upper surface of the inner roof 31. The protrusion 140a is located on the left side of the first guide section 123 (see Fig. 21A).

The first air conditioner fixing member 310 is formed in a shape obtained by appropriately bending a plate-shaped member. The first air conditioner fixing member 310 includes a first portion 311, a second portion 312, and a third portion 313.

The first portion 311 illustrated in Figs. 21A, 21B, and 22 overlaps the upper surface of the inner roof 31 (the left side of the first guide section 123) in plan view. Further, the first portion 311 is a right portion of the first air conditioner fixing member 310.

The second portion 312 overlaps the protrusion 140a of air conditioning unit 140 in planar view. The second portion 312 is formed on the left side of the first portion 311. Further, the second portion 312 is formed at a position higher than the first portion 311.

The third portion 313 overlaps the second air conditioner fixing member 330 in planar view. The third portion 313 is formed on the rear side of the second portion 312. Further, the third portion 313 is formed at a position higher than the second portion 312. A bolt portion 313a extending upward is formed on the third portion 313.

As illustrated in Fig. 22, the first portion 311 of the first air conditioner fixing member 310 is fixed to the upper surface of the inner roof 31 by a first fastener 341 such as a bolt. More specifically, the first portion 311 is fixed to an upper surface of a portion (hollow portion 31a) formed in a hollow shape in the inner roof 31. In the present embodiment, the left side of the first guide section 123 is fixed to the hollow portion 31a formed between the upper surface and the lower surface of the inner roof 31. Further, the first fastener 341 is attached to a receiver 342a (rivet nut or the like) provided on the upper surface of the inner roof 31. Furthermore, the second portion 312 and the protrusion 140a of the air conditioning unit 140 are fixed to each other by the second fastener 342 such as a bolt.

In this manner, the air conditioning unit 140 is fixed to the upper surface of the inner roof 31 via the first air conditioner fixing member 310. With this configuration, the air conditioning unit 140 can be fixed using the upper surface of the inner roof 31. Accordingly, the air conditioning unit 140 can be fixed at any position regardless of the position of the cabin frame 20 (strength member), and hence the degree of freedom in designing can be enhanced.

The reinforcing member 320 illustrated in Fig. 22 is a member that reinforces the inner roof 31. The reinforcing member 320 is made of, for example, rubber. The reinforcing member 320 is disposed in the hollow portion 31a formed between the upper surface and the lower surface of the inner roof 31. In the present embodiment, the reinforcing member 320 is disposed on the left side of the first guide section 123 so as to face the first fastener 341. Since the inner roof 31 can be supported by the reinforcing member 320, deformation of the inner roof 31 around the first fastener 341 can be suppressed.

Note that the above-described configuration of the reinforcing member 320 (materials, disposition, and the like) is an example, and can be appropriately changed. For example, the reinforcing member 320 may be made of a material other than rubber. For example, the reinforcing member 320 may be configured by filling the inner roof 31 with a foam material. Although the reinforcing member 320 is disposed so as to face the first fastener 341, the disposition of the reinforcing member 320 is not particularly limited, and may be disposed at a position not facing the first fastener 341, for example.

The second air conditioner fixing member 330 illustrated in Figs. 21A, 21B, and 22 fixes the air conditioning unit 140 to the cabin frame 20. The second air conditioner fixing member 330 is formed in a plate shape (band shape) extending in the left-right direction. The second air conditioner fixing member 330 includes a cylindrical portion 331.

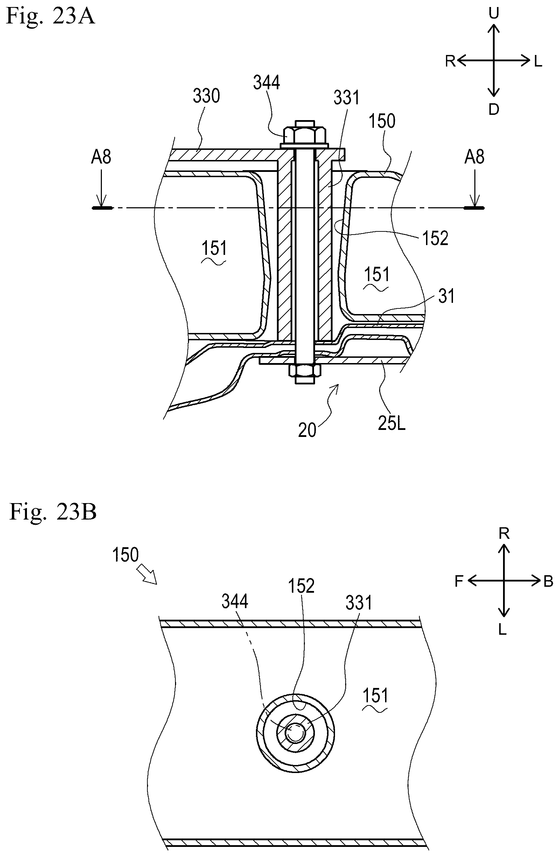

As illustrated in Figs. 21A, 21B, and 23A, the cylindrical portion 331 is formed so as to protrude downward from a right end of the second air conditioner fixing member 330. The cylindrical portion 331 is formed such that a fourth fastener 344 such as a bolt can be vertically inserted. The vertical width of the cylindrical portion 331 is formed to be substantially the same as the width of the first guide member 150. The cylindrical portion 331 of the present embodiment is formed in a cylindrical shape.

As illustrated in Figs. 21A, 21B, and 22, the right end of the second air conditioner fixing member 330 is placed on the third portion 313 of the first air conditioner fixing member 310. Further, the bolt portion 313a is inserted into the right end of the second air conditioner fixing member 330. By attaching the third fastener 343 such as a nut to the bolt portion 313a, the first air conditioner fixing member 310 and the second air conditioner fixing member 330 are fixed to each other.

As illustrated in Figs. 21A, 21B, 23A, and 23B, the left end of the second air conditioner fixing member 330 is disposed so as to overlap the first guide member 150 in planar view. The cylindrical portion 331 of the second air conditioner fixing member 330 is disposed so as to vertically penetrate the first guide member 150.

As described above, the first guide member 150 allows conditioned air supplied from the air conditioning unit 140 into the cabin 10 to flow (constitute a supply path), but the cylindrical portion 331 is disposed so as to avoid a flow path 151 of the conditioned air. Hereinafter, the configuration of the first guide member 150 for the cylindrical portion 331 to avoid the flow path 151 will be described. As illustrated in Figs. 23A and 23B, the first guide member 150 includes the flow path 151 and a hole forming portion 152.

The hole forming portion 152 is a portion that forms a hole partitioned from the flow path 151. The hole forming portion 152 is formed in a portion of the first guide member 150 overlapping the second air conditioner fixing member 330 in planar view. A cross section of the hole forming portion 152 is formed in a substantially annular shape in plan view in which an inner diameter is larger than an outer diameter of the cylindrical portion 331. Further, the hole forming portion 152 is formed so as to vertically penetrate the first guide member 150. Furthermore, the hole forming portion 152 is formed to extend from the upper surface to the lower surface of the first guide member 150. Thus, the hole forming portion 152 is formed so that the cylindrical portion 331 can be inserted therethrough and is partitioned from the flow path 151.

The cylindrical portion 331 of the second air conditioner fixing member 330 is inserted into the hole forming portion 152. The lower end of the cylindrical portion 331 abuts on the upper surface of the inner roof 31. In this state, the fourth fastener 344 such as a bolt is inserted into the cylindrical portion 331.

The fourth fastener 344 vertically penetrates the first guide member 150 and the inner roof 31 and is attached to the cabin frame 20 (in Fig. 23A, the left side beam 25L). Accordingly, the air conditioning unit 140 is fixed to the cabin frame 20 via the first air conditioner fixing member 310 and the second air conditioner fixing member 330.

Further, the air conditioning unit 140 is fixed to the cabin frame 20 using a space of the first guide member 150 that is partitioned from the flow path 151. With this configuration, it is possible to suppress the conditioned air flowing through the flow path 151 (conditioned air from the air conditioning unit 140) from leaking to the outside of the first guide member 150. Further, by forming the hole forming portion 152 at any position, the air conditioning unit 140 can be fixed at any position regardless of the disposition of the first guide member 150, so that the degree of freedom in design can be improved.

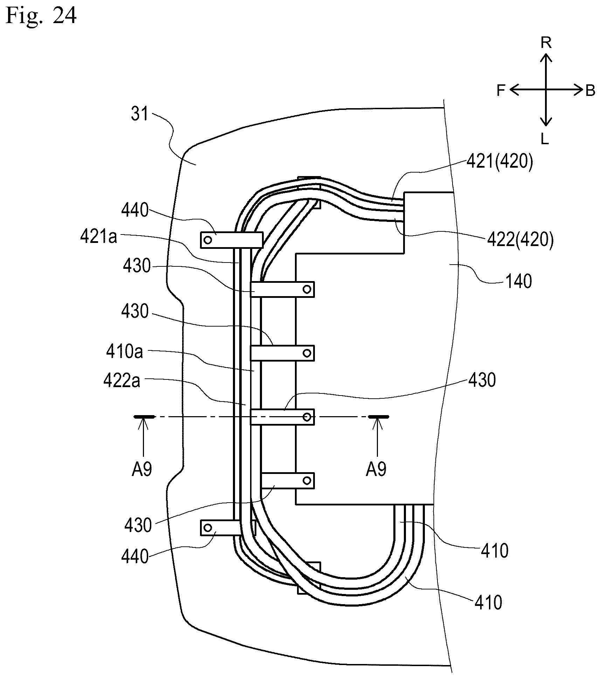

As illustrated in Fig. 24, heater hoses 410 and cooler hoses 420 are connected to the air conditioning unit 140 fixed to the inner roof 31 as described above. Hereinafter, the heater hoses 410 and the cooler hoses 420 will be described.

The heater hoses 410 connect the air conditioning unit 140 and the engine 3 such that the refrigerant circulates between the air conditioning unit 140 and the engine 3. One end of each of the heater hoses 410 is connected to the left side of the air conditioning unit 140. More specifically, one end of each of the heater hoses 410 is connected to the left side with respect to the left-right center of the air conditioning unit 140 in the left-right direction. In the present embodiment, one end of each of the heater hoses 410 is connected to the left side surface of the air conditioning unit 140. Further, a pair of heater hoses 410 is provided such that the refrigerant circulates between the air conditioning unit 140 and the engine 3.

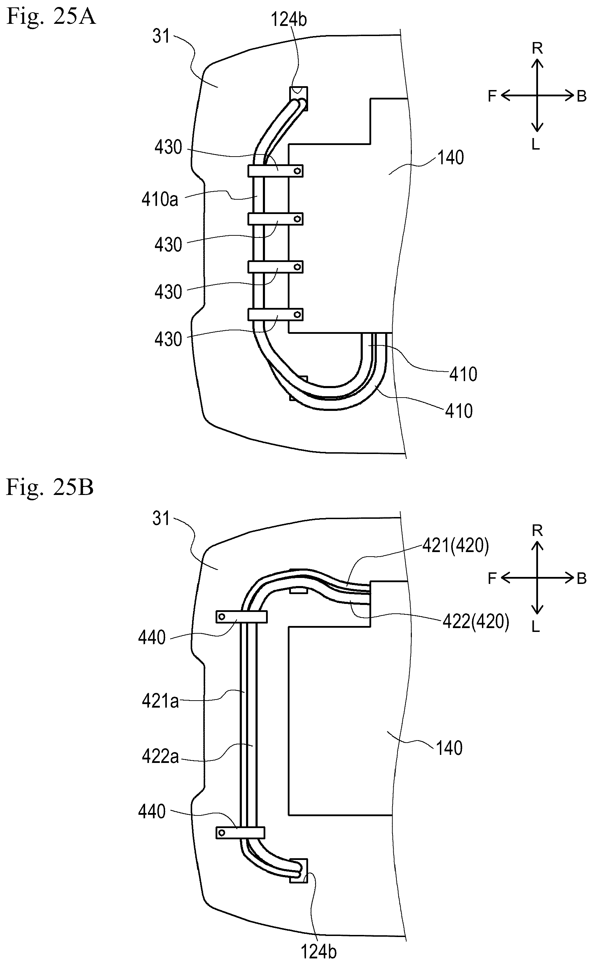

As illustrated in Fig. 25A, the heater hoses 410 are bent so as to be folded back from the left side to the right side of the air conditioning unit 140. The heater hoses 410 extend in the left-right direction on the front side of the air conditioning unit 140. Hereinafter, these portions of the heater hoses 410 (the portions extending to the left and right on the front side of the air conditioning unit 140) are referred to as "heater extending portions 410a".

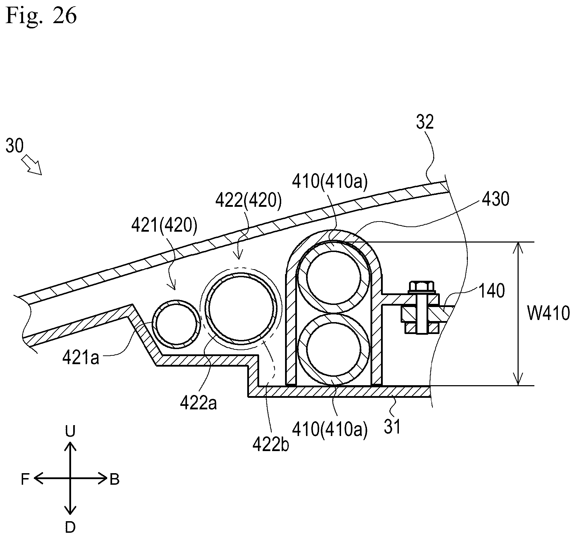

As illustrated in Figs. 25A and 26, the heater hoses 410 (heater extending portions 410a) are fixed to the front portion of the air conditioning unit 140 via first band members 430. Further, the heater extending portions 410a of the pair of heater hoses 410 are provided in parallel in the vertical direction on the front side of the air conditioning unit 140 (the internal space of the roof unit 30). Accordingly, space saving can be achieved by disposing the heater hoses 410 vertically.

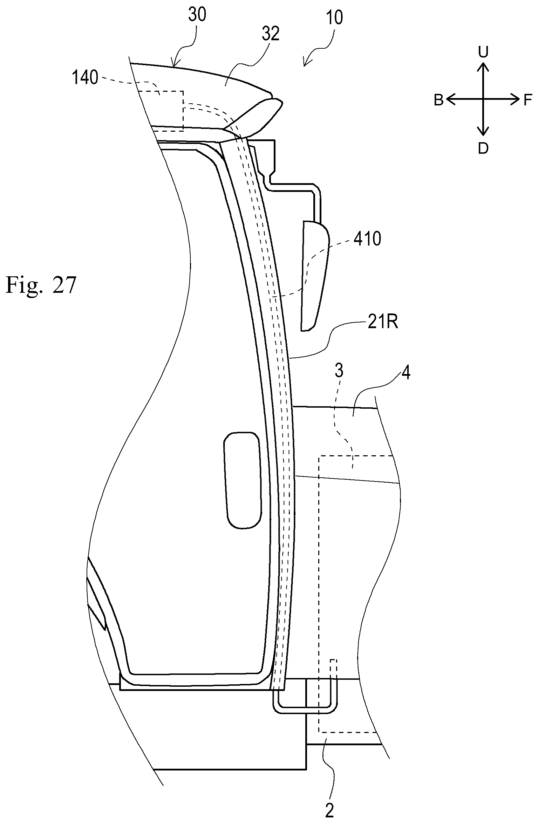

As illustrated in Fig. 25A, the heater hoses 410 are guided to the outside of the roof unit 30 via the hose insertion portion 124b formed at the right portion of the roof unit 30. As illustrated in Fig. 27, the heater hoses 410 guided to the outside of the roof unit 30 pass through the inside of the right front pillar 21R disposed on the right front side of the cabin 10 and extend downward in the right front pillar 21R. Note that, in Fig. 27, only one heater hose 410 of the pair of heater hoses 410 is illustrated, and the other heater hose 410 is not illustrated.

The heater hoses 410 extending from the right front pillar 21R extend forward from a lower end of the right front pillar 21R and are connected to the engine 3.

The air conditioning unit 140 of the present embodiment is disposed on the front side of the roof unit 30 and is disposed at a position relatively close to the right front pillar 21R in the front-rear direction. Thus, by passing the heater hoses 410 through the right front pillar **21R,** the lengths of the heater hoses 410 can be made relatively short, and space saving can be achieved.

The cooler hoses 420 illustrated in Figs. 24 and 25B connect the air conditioning unit 140, the compressor 13, and the condenser 14 such that the refrigerant circulates through the air conditioning unit 140, the compressor 13, and the condenser 14. One end of each of the cooler hoses 420 is connected to the right side of the air conditioning unit 140. More specifically, one end of each of the cooler hoses 420 is connected to the right side with respect to the left-right center of the air conditioning unit 140 in the left-right direction. In the present embodiment, one end of each of the cooler hoses 420 is connected to a right rear portion of the air conditioning unit 140. Further, a pair of cooler hoses 420 is provided such that the refrigerant circulates through the air conditioning unit 140, the compressor 13, and the condenser 14 (see Fig. 1).

One of the pair of cooler hoses 420 connects the condenser 14 and the air conditioning unit 140 so as to guide the refrigerant cooled by the condenser 14 to the air conditioning unit 140. Hereinafter, this cooler hose 420 is referred to as a "first cooler hose 421". The refrigerant circulates in a liquid state in the first cooler hose 421.

The other of the pair of cooler hoses 420 connects the compressor 13 and the air conditioning unit 140 so as to guide the refrigerant from the air conditioning unit 140 to the compressor 13. Hereinafter, this cooler hose 420 is referred to as a "second cooler hose 422". The refrigerant circulates in a gaseous state in the second cooler hose 422. The second cooler hose 422 is formed to have a larger diameter than the first cooler hose 421 (see Fig. 26).

The pair of cooler hoses 420 is bent leftward after extending forward from a right rear end of the air conditioning unit 140. The cooler hoses 420 extend in the left-right direction on the front side of the air conditioning unit 140 and the heater hoses 410 (heater extending portions 410a). Hereinafter, of the first cooler hose 421 and the second cooler hose 422, the portions (portions extending to the left and right on the front side of the air conditioning unit 140) are referred to as "cooler extending portions 421a and 422a".

The cooler extending portions 421a and 422a of the first cooler hose 421 and the second cooler hose 422 are provided in parallel in the front-rear direction on the front side of the air conditioning unit 140 (the internal space of the roof unit 30).

Here, the front portion of the upper surface of the outer roof 32 of the present embodiment (closer to the front side than the air conditioning unit 140) is formed to be inclined frontward and downward. The vertical width of the internal space (front portion) of the roof unit 30 partitioned by the outer roof 32 gradually decreases toward the front. Accordingly, in the present embodiment, the cooler extending portion 422a having a larger diameter is disposed side by side behind the cooler extending portion 421a having a smaller diameter. Thus, the first cooler hose 421 and the second cooler hose 422 can be easily disposed in the roof unit 30 (outer roof 32) inclined forward and downward.

Further, the cooler extending portion 422a of the second cooler hose 422 is disposed in parallel with the heater extending portions 410a in the front-rear direction. In the present embodiment, the pair of heater extending portions 410a is disposed side by side behind the cooler extending portions 422a. As described above, the pair of heater extending portions 410a is disposed side by side vertically. A vertical width W410 from an upper end of the upper heater extending portion 410a to a lower end of the lower heater extending portion 410a is larger than an outer diameter of the cooler extending portion 422a.

Thus, by disposing the heater extending portions 410a side by side on the rear side of the cooler extending portion 422a, the second cooler hose 422 and the pair of heater hoses 410 can be easily disposed in the roof unit 30 (outer roof 32) inclined forward and downward.

As illustrated in Fig. 25B, the cooler hoses 420 are fixed to the front portion of the inner roof 31 (the front side of the heater hoses 410) via second band members 440. As described above, in the present embodiment, the heater hoses 410 and the cooler hoses 420 are fixed to different members. Accordingly, heat exchange between the heater hoses 410 and the cooler hoses 420 can be suppressed.

The cooler hoses 420 are guided to the outside of the roof unit 30 via the hose insertion portion 124b formed in the left portion of the roof unit 30. The cooler hoses 420 guided to the outside of the roof unit 30 pass through the inside of the left front pillar 21L disposed on the left front side of the cabin 10 and extend downward along the left front pillar 21L (not illustrated).

The cooler hoses 420 extending from the left front pillar 21L extend forward from the lower end of the left front pillar 21L and are connected to the compressor 13 and the condenser 14 (not illustrated). More specifically, the first cooler hose 421 is connected to the condenser 14, and the second cooler hose 422 is connected to the compressor 13.

The air conditioning unit 140 of the present embodiment is disposed on the front side of the roof unit 30 and is disposed at a position relatively close to the left front pillar 21L in the front-rear direction. Therefore, by passing the cooler hoses 420 through the left front pillar **21L,** the lengths of the cooler hoses 420 can be relatively shortened, and space saving can be achieved.

The refrigerant having a temperature lower than that of the first cooler hose 421 flows through the second cooler hose 422 having a diameter larger than that of the first cooler hose 421. Since the second cooler hose 422 is relatively easily condensed, a heat insulating material 422b (see Fig. 26) may be attached to the second cooler hose 422. Accordingly, dew condensation of the second cooler hose 422 can be suppressed.

In the present embodiment, out of the heater hoses 410 and the cooler hoses 420, the heater hoses 410 pass through a pillar disposed on the right side of the cabin 10 (see Fig. 27). Accordingly, it is possible to improve the comfort at the time of getting on and off the cabin 10.

More specifically, the worker generally gets on and off the tractor 1 not from the right side where a large number of operation tools are disposed but from the left side. In this case, the worker does not touch the right pillar (right front pillar 21R) at the time of getting on and off the vehicle. Accordingly, in the present embodiment, the heater hoses 410 having high temperatures are disposed in the pillar on the right side so that it is difficult for the worker to feel the heat of the heater hoses 410 when getting on and off the vehicle. This can improve the comfort of getting on and off the vehicle.

In addition, since the cooler hoses 420 having low temperatures are disposed in the pillar on the left side (left front pillar 21L) that can be easily touched by the worker when the worker gets on and off the vehicle, it is possible to suppress the temperature rise of the pillar on the left side (make it difficult to feel heat) even when the air conditioning unit 140 operates.

In the present embodiment, the heater hoses 410 are disposed from the left side to the right side (right front pillar 21R) of the air conditioning unit 140, and the cooler hoses 420 are disposed from the right side to the left side (left front pillar 21L) of the air conditioning unit 140 (see Fig. 24). Accordingly, in the present embodiment, the heater hoses 410 and the cooler hoses 420 are disposed so as to intersect each other in plan view, and the heater hoses 410 and the cooler hoses 420 are easily passed through the left and right pillars.

As described above, the working vehicle (tractor 1) according to the present embodiment includes the inner roof 31 having the hollow portion 31a formed between an upper surface and a lower surface, the outer roof 32 disposed above the inner roof 31 and forming an internal space with the inner roof 31, and the air conditioning unit 140 housed in the internal space and fixed to the upper surface of the inner roof (see Figs. 21A, 21B, and 22).

With such a configuration, the air conditioning unit 140 can be fixed at any position using the upper surface of the inner roof 31, and the degree of freedom in designing the air conditioning unit 140 can be improved.

The working vehicle (tractor 1) further includes the reinforcing member 320 that is disposed in the hollow portion 31a and reinforces the inner roof 31 (see Fig. 22).

With such a configuration, the deformation of the inner roof 31 can be suppressed by reinforcing the inner roof 31 with the reinforcing member 320.

Further, the reinforcing member 320 is disposed so as to face a first air conditioner stopper (first fastener 341) that fixes the air conditioning unit 140 to the upper surface of the inner roof 31 (see Fig. 22).

With such a configuration, it is possible to suppress deformation of the inner roof 31 around the first air conditioner stopper (first fastener 341).

The working vehicle (tractor 1) further includes the cabin frame 20 constituting the framework of the cabin 10, and the air conditioning unit 140 is fixed to the upper surface of the inner roof 31 and the cabin frame 20 via the common air conditioner fixing member (first air conditioner fixing member 310) (see Figs. 21A, 21B, and 22).

With such a configuration, the air conditioning unit 140 can be fixed to the upper surface of the inner roof 31 and the cabin frame 20 using a common member (first air conditioner fixing member 310).

The working vehicle (tractor 1) further includes a supply duct (first guide member 150) constituting a supply flow path through which air supplied from the air conditioning unit 140 into the cabin 10 flows, and the air conditioning unit 140 is fixed to the cabin frame 20 using a second air conditioner stopper (fourth fastener 344) disposed so as to vertically penetrate the supply duct (see Fig. 23A).

With such a configuration, since the supply duct (first guide member 150) can be disposed regardless of the fixing position of the second air conditioner stopper (fourth fastener 344), the degree of freedom in designing the supply duct can be improved.

Further, the supply duct (first guide member 150) has the hole forming portion 152 forming a hole partitioned from the supply flow path, the hole vertically penetrating the supply duct so that the second air conditioner stopper (fourth fastener 344) can be inserted therethrough (see Figs. 23A and 23B).

With such a configuration, it is possible to suppress leakage of the air flowing through the supply duct (first guide member 150).

Note that the tractor 1 according to the present embodiment is an embodiment of the working vehicle.

Further, the first fastener 341 according to the present embodiment is an embodiment of the first air conditioner stopper.

Further, the first air conditioner fixing member 310 according to the present embodiment is an embodiment of the air conditioner fixing member.

Further, the first guide member 150 according to the present embodiment is an embodiment of the supply duct.

Further, the fourth fastener 344 according to the present embodiment is an embodiment of the second air conditioner stopper.

As described above, the working vehicle (tractor 1) according to the present embodiment includes the roof unit 30 having an internal space partitioned by the inner roof 31 and the outer roof 32, the air conditioning unit 140 housed in the internal space, the right pillars (right front pillar 21R and right rear pillar 22R) disposed on the right side of the cabin 10, the left pillars (left front pillar 21L and left rear pillar 22L) disposed on the left side of the cabin 10, and the heater hoses 410 disposed so as to pass through the inside of the right pillars and connecting the air conditioning unit 140 and the engine 3 so that a refrigerant circulates between the air conditioning unit 140 and the engine 3 (see Fig. 24).

With such a configuration, it is possible to improve the comfort when getting on and off the cabin 10.

Specifically, since the heater hoses 410 having high temperatures are disposed in the right pillar (the right front pillar 21R or the like) among the left and right pillars, the temperature rise of the left pillar (the left front pillar 21L or the like) is suppressed. Since the worker often gets on and off the working vehicle (tractor 1) from the left side, by suppressing the temperature rise of the left pillar, it is possible to make it difficult for the worker to feel heat (temperature rise of the left pillar) when getting on and off the working vehicle.

The working vehicle (tractor 1) further includes the compressor 13 that is disposed in an engine room and compresses a refrigerant, the condenser 14 that is disposed in the engine room and cools the refrigerant compressed by the compressor 13, and the cooler hoses 420 that are disposed so as to pass through the inside of the left pillar (left front pillar 21L or the like) and connect the air conditioning unit 140, the compressor 13, and the condenser 14 such that the refrigerant circulates through the air conditioning unit 140, the compressor 13, and the condenser 14 (see Fig. 24).

With such a configuration, the cooler hoses 420 having low temperatures are disposed on the left pillar (the left front pillar 21L or the like) among the left and right pillars, so that the temperature rise of the left pillar can be suppressed.

Further, the air conditioning unit 140 is disposed on the front side of the internal space, the right pillars include the right front side pillar (right front pillar 21R) disposed on the right front side of the cabin 10 and in which the heater hoses 410 are disposed, and the left pillars include the left front side pillar (left front pillar 21L) disposed on the left front side of the cabin 10 and in which the cooler hoses 420 are disposed (see Figs. 24 and 27).

With such a configuration, since the heater hoses 410 and the cooler hoses 420 can be disposed using the pillar having the front and rear positions relatively close to the air conditioning unit 140, the lengths of the heater hoses 410 and the like can be relatively shortened, and space saving can be achieved.

Further, the heater hoses 410 include the heater extending portions 410a extending in the left-right direction on the front side of the air conditioning unit 140 in the internal space, and the cooler hoses 420 include the cooler extending portions 421a and 422a extending in the left-right direction on the front side of the air conditioning unit 140 in the internal space (see Fig. 24).

With such a configuration, by disposing the heater hoses 410 and the cooler hoses 420 on the front side of the air conditioning unit 140, the space on the rear side of the air conditioning unit 140 can be effectively utilized.

Further, the heater hoses 410 are connected to the left side of the air conditioning unit 140, and the cooler hoses 420 are connected to the right side of the air conditioning unit 140 (see Fig. 24).

With this configuration, the heater hoses 410 and the cooler hoses 420 are disposed so as to cross each other, and the heater hoses 410 and the cooler hoses 420 can be easily passed through the left front side pillar and the right front side pillar (the left front pillar 21L and the right front pillar 21R).

Further, the heater extending portions 410a and the cooler extending portions 421a and 422a are disposed in parallel in the front-rear direction (see Fig. 26).

With this configuration, the heater hoses 410 and the cooler hoses 420 can be disposed side by side in the internal space of the roof unit 30.

Further, the cooler hoses 420 include the first cooler hose 421 that guides the refrigerant cooled by the condenser 14 to the air conditioning unit 140, and the second cooler hose 422 that has a larger diameter than the first cooler hose 421 and guides the refrigerant from the air conditioning unit 140 to the compressor 13. The cooler extending portion 422a of the second cooler hose 422 is disposed behind the cooler extending portion 421a of the first cooler hose 421 (see Fig. 26).

With this configuration, the first cooler hose 421 and the second cooler hose 422 can be easily disposed in the roof unit 30 inclined forward and downward.

Further, the second cooler hose 422 is provided with the heat insulating material 422b (see Fig. 26).

With such a configuration, it is possible to suppress condensation on the second cooler hose 422 having a temperature lower than that of the first cooler hose 421.

Further, middle portions of the heater hoses 410 are fixed to one of the air conditioning unit 140 and the inner roof 31 (the air conditioning unit 140 in the present embodiment), and middle portions of the cooler hoses 420 are fixed to the other one of the air conditioning unit 140 and the inner roof 31 (the inner roof 31 in the present embodiment) (see Fig. 24).

With such a configuration, since the heater hoses 410 and the cooler hoses 420 can be fixed to separate members, heat exchange between the heater hoses 410 and the cooler hoses 420 can be suppressed.

In addition, a pair of at least one of the heater hoses 410 or the cooler hoses 420 (the heater hoses 410 in the present embodiment) is provided in parallel in the vertical direction in the internal space (see Fig. 26).

With such a configuration, the pair of heater hoses 410 or the pair of cooler hoses 420 can be disposed in the vertical direction to achieve space saving.

Note that the tractor 1 according to the present embodiment is an embodiment of the working vehicle.

Further, the right front pillar 21R and the right rear pillar 22R according to the present embodiment are an embodiment of the right pillar.

Further, the left front pillar 21L and the left rear pillar 22L according to the present embodiment are an embodiment of the left pillar.

Further, the right front pillar 21R according to the present embodiment is an embodiment of the right front side pillar.

Further, the left front pillar 21L according to the present embodiment is an embodiment of the left front side pillar.

As described above, the working vehicle (tractor 1) according to the present embodiment includes the roof unit 30 having an internal space partitioned by the inner roof 31 and the outer roof 32, the filter device 161 that is housed in the internal space and is capable of removing a removal target contained in introduced external air, the first seal member 220 that seals at least a space in which the filter device 161 is disposed, and the second seal member 230 that seals at least a space in which a duct (second guide member 166) connected to the filter device 161 is disposed (see Fig. 18).

With this configuration, the space in which the filter device 161 is disposed and the space in which the duct (second guide member 166) is disposed can be sealed separately.

Further, the filter device 161 and the first seal member 220 are disposed inside a second seal region surrounded by the second seal member 230 (see Fig. 18).

With such a configuration, it is possible to suppress water from entering the first seal region by the plurality of seal members (first seal member 220 and second seal member 230).

The working vehicle (tractor 1) further includes a first fixing member (fastener 240) that is disposed so as to penetrate the first seal member 220 and fixes the inner roof 31 and the outer roof 32 (see Figs. 19A and 19B).

With such a configuration, the outer roof 32 is pressed against the first seal member 220 with a strong force by the first fixing member (fastener 240) penetrating the first seal member 220, and the sealability of the first seal region can be improved.

The inner roof 31 further includes the discharge portion 250 that discharges water from a contact portion in contact with the first seal member 220 to the outside of the roof unit 30 (see Figs. 19A and 19B).

With such a configuration, water that has entered the internal space of the roof unit 30 from between the first fixing member (fastener 240) and the first seal member 220 can be discharged to the outside of the roof unit 30, so that it is possible to suppress accumulation of water in the internal space.

In addition, the discharge portion 250 includes the groove 251 at least a part of which is formed in the contact portion and which guides water from the contact portion to a first seal region surrounded by the first seal member 220 (see Figs. 19B and 20).

With such a configuration, water can be discharged from the first seal region using the groove 251.

Further, the discharge portion 250 discharges water to the outside of the roof unit 30 via an introduction port (outside air introduction port 121a) that introduces air outside the roof unit 30 into the filter device 161 (see Figs. 19A and 19B).

With such a configuration, it is possible to discharge water by the discharge portion 250 using the introduction port (outside air introduction port 121a) through which external air is introduced. Thus, for example, the number of holes formed in the inner roof 31 can be reduced, and the strength of the inner roof 31 can be secured.

The working vehicle (tractor 1) further includes the pipe 252 that guides water from the groove 251 to the introduction port (outside air introduction port 121a) (see Figs. 19A and 19B).

With such a configuration, it is possible to suppress wetting of the filter device 161 with water by guiding water by the pipe 252.

The working vehicle (tractor 1) further includes the cabin frame 20 constituting the framework of the cabin 10, and a second fixing member (fastener 34) that is disposed inside a second seal region surrounded by the second seal member 230 and fixes the inner roof 31 to the cabin frame 20 (see Fig. 18).

With such a configuration, the inner roof 31 can be fixed to the cabin frame 20 inside a second seal region.

**In** addition, the second fixing member (fastener 34) is disposed to be shifted in position in plan view with respect to a housing member housed in the internal space and disposed inside the second seal region (see Fig. 18).

With such a configuration, the inner roof 31 can be easily fixed to the cabin frame 20 by the second fixing member (fastener 34) in a state where the housing member is housed in the internal space.

Further, the housing member includes the blowers 130 and 163 that introduce air outside the roof unit 30 into the internal space, the duct (second guide member 166), and the air conditioning unit 140 that supplies air flowing through the duct into the cabin.

With such a configuration, the inner roof 31 can be fixed to the cabin frame 20 by the second fixing member (fastener 34) in a state where the blowers 130 and 163, the duct (second guide member 166), and the air conditioning unit 140 are housed in the internal space.

Further, the cabin frame 20 includes an upper frame having an upper portion formed in a frame shape by a pair of left and right beam portions (left side beam 25L and right side beam 25R) extending in the front-rear direction and a pair of front and rear beam portions (front beam 23 and rear beam 24) extending in the left-right direction, and a pair of frame reinforcing members 28 provided at corner portions formed by the rear beam portion out of the pair of front and rear beam portions and the pair of left and right beam portions and reinforcing the rear side of the upper frame, and the second fixing member (fastener 34) is attached to each of the pair of left and right beam portions, the pair of front and rear beam portions, and the pair of frame reinforcing members 28 (see Fig. 4).

With such a configuration, the inner roof 31 can be fixed to the cabin frame 20 in a well-balanced manner by attaching the second fixing member (fastener 34) to various members (pair of left and right beam portions, pair of front and rear beam portions, and pair of frame reinforcing members 28).

Note that the tractor 1 according to the present embodiment is an embodiment of the working vehicle.

Further, the second guide member 166 according to the present embodiment is an embodiment of the duct.

Further, the fastener 240 according to the present embodiment is an embodiment of the first fixing member.

Further, the outside air introduction port 121a according to the present embodiment is an embodiment of the introduction port.

Further, the fastener 34 according to the present embodiment is an embodiment of the second fixing member.

Further, the left side beam 25L and the right side beam 25R according to the present embodiment are an embodiment of the pair of left and right beam portions.

Further, the front beam 23 and the rear beam 24 according to the present embodiment are an embodiment of the pair of front and rear beam portions.

As described above, the working vehicle (tractor 1) according to the present embodiment includes the roof unit 30 having an internal space partitioned by the inner roof 31 and the outer roof 32, the air conditioning unit 140 that is housed in the internal space and air-conditions the interior of the cabin 10, a first filter device (filter device 111) capable of removing a removal target contained in the introduced external air, a second filter device (filter device 161) capable of removing a removal target contained in the introduced external air and being different from the first filter device, and the switching mechanism 170 capable of switching among a first introduction state in which the air purified by the first filter device is introduced into the air conditioning unit 140, a second introduction state in which the air purified by the second filter device is introduced into the air conditioning unit 140, and an inside air circulation state in which air from the interior of the cabin 10 is introduced into the air conditioning unit 140 (see Figs. 14, 15A and 15B).

With this configuration, the switching mechanism 170 can switch among the first introduction state illustrated in Fig. 16A, the second introduction state illustrated in Fig. 16B, and the inside air circulation state illustrated in Fig. 17, thereby improving convenience.

The working vehicle (tractor 1) further includes the introduction member 167 in which the first opening 167b into which the air purified by the first filter device (filter device 111) is introduced, the second opening 167c into which the air purified by the second filter device (filter device 161) is introduced, and the third opening 167d into which air from the cabin 10 is introduced are formed, and a duct portion (first guide section 123) that guides the air introduced into the introduction member 167 to the air conditioning unit 140 (see Figs. 12 and 14).

With such a configuration, since the air can be introduced into the air conditioning unit 140 using the common path (the introduction member 167 and the duct portion), the flow path of the air can be simplified.

Further, the second opening 167c and the third opening 167d are formed on the downstream side of the first opening 167b in a flowing direction of the air purified by the first filter device (filter device 111), and the switching mechanism 170 includes the first switching unit 171 that switches whether or not to introduce the air purified by the first filter device into the first opening 167b, the second switching unit 173 that switches whether or not to introduce the air purified by the second filter device (filter device 161) into the second opening 167c, the third switching unit 175 that switches whether or not to introduce the air between the first opening 167b and the second opening 167c and the third opening 167d in the flowing direction, and the drive unit (first drive unit 172, second drive unit 174, and third drive unit 176) that drives the first switching unit 171, the second switching unit 173, and the third switching unit 175 (see Figs. 13 to 15B).

With this configuration, the first introduction state, the second introduction state, and the inside air circulation state can be switched by controlling the drive unit (the first drive unit 172 or the like).

Further, the first switching unit 171 and the third switching unit 175 are provided in the introduction member 167 (see Fig. 14).

With such a configuration, the first switching unit 171 and the third switching unit 175 can be provided using a common member (introduction member 167).

The working vehicle (tractor 1) further includes a detection unit 180 that detects a switching state of the first switching unit 171 (see Fig. 15B).

With such a configuration, it is possible to grasp whether or not air can be introduced into the first opening 167b.

The working vehicle (tractor 1) further includes the blower 163 that is connected to the second filter device (filter device 161) and sends air purified by the second filter device, and a duct (second guide member 166) that is connected to the blower 163 and the introduction member 167 and guides air sent from the blower 130 to the introduction member 167, and the second switching unit 173 is configured to open and close a connecting portion (case 164) between the blower 163 and the duct (see Fig. 13).

With this configuration, it is possible to switch whether or not to introduce air into the second opening 167c at a position relatively close to the second filter device (filter device 161) (end of duct on second filter device side).

Further, the inner roof 31 is provided with the inside air introduction section 126 that introduces air in the cabin 10 into the internal space, and the inside air introduction section 126, the second filter device (filter device 161), and the introduction member 167 are disposed in parallel along the left-right direction in plan view (see Fig. 9).

With such a configuration, it is possible to effectively utilize spaces on the front side and the rear side of the inside air introduction section 126, the second filter device (filter device 161), and the like.

Note that the tractor 1 according to the present embodiment is an embodiment of the working vehicle.

Further, the filter device 111 according to the present embodiment is an embodiment of the first filter device.

Further, the filter device 161 according to the present embodiment is an embodiment of the second filter device.

Further, the first guide section 123 according to the present embodiment is an embodiment of the duct portion.

Further, the first drive unit 172, the second drive unit 174, and the third drive unit 176 according to the present embodiment are an embodiment of the drive unit.

Although the embodiment of the disclosure has been described above, the disclosure is not limited to the above configuration, and various modifications can be made within the scope of the invention described in the claims.

For example, in the above embodiment, the tractor 1 has been described as an example of the working vehicle, but other agricultural vehicles, construction vehicles, industrial vehicles, and the like may be used.

Further, the configuration (shape, size, number, disposition, and the like) of each member described in the above embodiment is not limited, and can be arbitrarily changed. For example, although the filter device 161 of the present embodiment is formed in a columnar shape (see Fig. 8), the shape of the filter device 161 is not limited to the present embodiment, and may be formed in a rectangular parallelepiped shape, for example.

Although the filter device 111 is provided outside the roof unit 30 (see Fig. 5), the disposition of the filter device 111 is not limited to the present embodiment. The filter device 111 may be disposed, for example, in the internal space of the roof unit 30 or the internal space of the left rear pillar 22L.

Although the outside air is introduced into the roof unit 30 from the left and right rear pillars 22L and 22R, the portion to which the outside air is introduced is not limited to the left and right rear pillars 22L and 22R. For example, outside air may be introduced into the roof unit 30 from the left and right front pillars 21L and 21R.

Although the air conditioning unit 140 of the present embodiment is fixed to the upper surface of the inner roof 31 on the side of the first guide section 123 (see Figs. 21A and 21B), this is an example, and the air conditioning unit 140 may be fixed to the upper surface of the inner roof 31 at a location different from the present embodiment.

Although the air conditioning unit 140 is fixed to the upper surface of the inner roof 31 via another member (first air conditioner fixing member 310 or the like), this is an example, and the air conditioning unit 140 may be directly fixed to the upper surface of the inner roof 31 (without another member).

Although the heater hoses 410 are disposed so as to pass through the inside of the right front pillar 21R (see Fig. 27), the heater hoses 410 may be disposed so as to pass through the inside of another pillar (right rear pillar 22R) disposed on the right side of the cabin 10.

Although the cooler hoses 420 are disposed so as to pass through the inside of the left front pillar 21L, the cooler hoses 420 may be disposed so as to pass through the inside of another pillar (left rear pillar 22L) disposed on the left side of the cabin 10.

In the present embodiment, the heater hoses 410 are connected to the left side of the air conditioning unit 140, and the cooler hoses 420 are connected to the right side of the air conditioning unit 140 (see Fig. 24). However, the connecting positions of the heater hoses 410 or the like to the air conditioning unit 140 are not particularly limited. For example, the heater hoses 410 may be connected to the right side of the air conditioning unit 140, and the cooler hoses 420 may be connected to the left side of the air conditioning unit 140.

In the present embodiment, the cooler hoses 420 are disposed on the front side of the heater hoses 410 in the internal space of the roof unit 30 (see Fig. 26), but this is an example, and the front-rear positional relationship between the heater hoses 410 and the cooler hoses 420 is not particularly limited.

In the present embodiment, the pair of heater hoses 410 is disposed in parallel in the vertical direction in the internal space of the roof unit 30 (see Fig. 26), but the disposition of the heater hoses 410 is not limited thereto. For example, the pair of heater hoses 410 may be disposed in parallel in the front-rear direction. Although the pair of cooler hoses 420 (the first cooler hose 421 and the second cooler hose 422) is disposed in parallel in the front-rear direction (see Fig. 26), the disposition of the cooler hoses 420 is not limited thereto. For example, the pair of cooler hoses 420 may be disposed in parallel in the vertical direction.

In the present embodiment, the heater hoses 410 are fixed to the air conditioning unit 140, and the cooler hoses 420 are fixed to the inner roof 31 (see Fig. 24). However, members to which the heater hoses 410 and the cooler hoses 420 are fixed are not particularly limited. For example, the heater hoses 410 may be fixed to the inner roof 31, and the cooler hoses 420 may be fixed to the air conditioning unit 140. In addition, at least one of the heater hoses 410 or the cooler hoses 420 may be fixed to a member different from the air conditioning unit 140 and the inner roof 31.

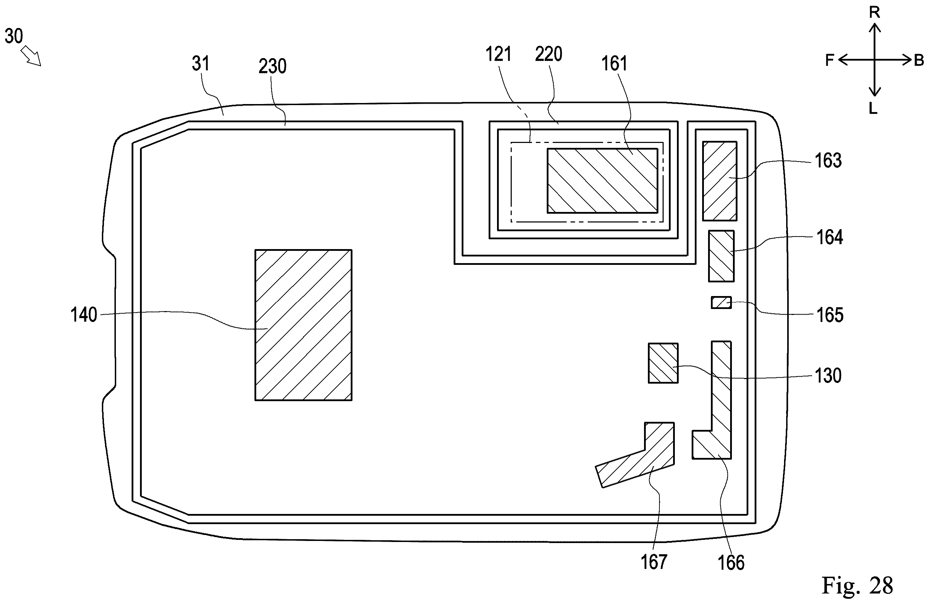

Although the first seal member 220 is disposed inside the second seal member 230 in plan view (see Fig. 18), the positional relationship between the first seal member 220 and the second seal member 230 is not limited thereto. For example, the first seal member 220 may be disposed outside the second seal member 230 in plan view. Fig. 28 illustrates an example of the first seal member 220 disposed outside the second seal member 230.

The second seal member 230 illustrated in Fig. 28 is disposed so as to avoid the first seal member 220 and the filter device 161. More specifically, the right rear portion of the second seal member 230 is disposed so as to be recessed to the left and right inner sides in plan view, and the first seal member 220 and the like are disposed in this recessed portion. By disposing the first seal member 220 outside the second seal member 230, it is possible to completely separate the first seal region sealed by the first seal member 220 and the second seal region sealed by the second seal member 230.

As described above, the filter device 161 and the first seal member 220 are disposed outside the second seal region surrounded by the second seal member 230.

With such a configuration, the first seal region and the second seal region can be completely divided, and it is possible to make it difficult for dust, moisture, or the like to move from one of the first seal region and the second seal region to the other.

## Claims

1. A working vehicle (1) comprising:
- a roof unit (30) having an internal space partitioned by an inner roof (31) and an outer roof (32);
- an air conditioning unit (140) that is housed in the internal space and air-conditions an interior of a cabin (10);
- a first filter device (111) capable of removing a removal target contained in introduced external air;
- a second filter device (161) capable of removing a removal target contained in introduced external air and different from the first filter device (111); and
- a switching mechanism (170) capable of switching among a first introduction state in which air purified by the first filter device (111) is introduced into the air conditioning unit (140), a second introduction state in which air purified by the second filter device (161) is introduced into the air conditioning unit (140), and an inside air circulation state in which air from the interior of the cabin (10) is introduced into the air conditioning unit (140).

2. The working vehicle (1) according to claim 1, further comprising:
- an introduction member (167) in which a first opening (167b) into which the air purified by the first filter device (111) is introduced, a second opening (167c) into which the air purified by the second filter device (161) is introduced, and a third opening (167d) into which air from the interior of the cabin (10) is introduced are formed; and
- a duct portion (123) that guides the air introduced into the introduction member (167) to the air conditioning unit (140).

3. The working vehicle (1) according to claim 2, wherein
- the second opening (167c) and the third opening (167d) are formed on a downstream side of the first opening (167b) in a flowing direction of the air purified by the first filter device (111), and
- the switching mechanism (170) includes:
- a first switching unit (171) that switches whether or not to introduce the air purified by the first filter device (111) into the first opening (167b);
- a second switching unit (173) that switches whether or not to introduce the air purified by the second filter device (161) into the second opening (167c);
- a third switching unit (175) that switches whether or not to introduce air among the first opening (167b), the second opening (167c), and the third opening (167d) in the flowing direction; and
- a drive unit (172,174,176) that drives the first switching unit (171), the second switching unit (173), and the third switching unit (175).

4. The working vehicle (1) according to claim 3, wherein the first switching unit (171) and the third switching unit (175) are provided on the introduction member (167).

5. The working vehicle (1) according to claim 3 or 4, further comprising a detection unit (180) that detects a switching state of the first switching unit (171).

6. The working vehicle (1) according to claim 3 or 4, further comprising:
- a blower (163) that is connected to the second filter device (161) and sends air purified by the second filter device (161); and
- a duct (166) that is connected to the blower (163) and the introduction member (167) and guides air sent from the blower (163) to the introduction member (167),
wherein the second switching unit (173) is configured to open and close a connecting portion (164) between the blower (163) and the duct (166).

7. The working vehicle (1) according to any one of claims 2 to 4, wherein
- an inside air introduction section (126) that introduces the air in the cabin (10) into the internal space is formed in the inner roof (31), and
- the inside air introduction section (126), the second filter device (161), and the introduction member (167) are disposed in parallel along a left-right direction in plan view.
